# EUROPEAN PATENT APPLICATION

(11) **EP 3 674 221 A1**
(43) Date of publication of application: **01.07.2020**
(21) Application number: 18864151.8
(22) Date of filing: 15.05.2018
(51) Int. Cl.: B64D 45/00, B64F 5/60

(54) **AIRCRAFT SOUNDNESS DIAGNOSTIC DEVICE AND AIRCRAFT SOUNDNESS DIAGNOSTIC METHOD**

(30) Priority: 06.10.2017 JP 2017196140
(71) Applicant: Mitsubishi Heavy Industries, Ltd., Chiyoda-ku Tokyo 1008332 (JP)
(72) Inventor: SAITO, Nozomi, Tokyo 108-8215 (JP); ISHIOKA, Masato, Tokyo 108-8215 (JP)
(74) Representative: Henkel & Partner mbB
(86) International application number: PCT/JP2018/018727
(87) International publication number: WO 2019/069501

(57) **Abstract**

Provided are an aircraft soundness diagnostic device and an aircraft soundness diagnostic method that enable diagnosis of detachment and the progress or the like of detachment of an adhered structure in the body of an aircraft. An aircraft soundness diagnostic device 10 is provided with a control unit 40 that carries out structure soundness monitoring of a body 2 of an aircraft 1. The control unit 40 has a first risk assessment unit 50 that assesses the risk of damage occurring in the body 2 on the basis of a correlation between reference data 105 stored in a storage unit 30 and a signal data set 106 based on measurement data 101 obtained through measurement carried out by a measuring instrument 20, a second risk assessment unit 60 that assesses the risk of damage occurring in the body 2 on the basis of the time-sequence change in the behavior of the signal data set 106, and a maintenance assessment unit 70 that assesses the life, repair timing, and a maintenance plan of the body 2 on the basis of the time-sequence change in the behavior of the signal data set 106.

## Description

### Technical Field

The present invention relates to an aircraft health diagnostic device and an aircraft health diagnostic method.

### Background Art

An aircraft is operated in a wide variety of ways by, for example, flying at a high speed and for a long time in the atmosphere on a regular route or repeatedly taking off and landing several times a day. Accordingly, the aircraft navigates while receiving various loads at all times at various parts of the airframe such as the fuselage, main wing, and tail wing, and thus airframe fatigue accumulates in proportion to the flight time. Accordingly, the aircraft is inspected and maintained at regular intervals every operation and every flight time, mainly when the aircraft is parked on the ground.

In the related art, skilled maintenance personnel inspect aircraft for damage and breakage such as the strain and cracking of the unevenness of the airframe by macroscopic or microscopic visual inspection or a device such as an ultrasonic wave detector, a magnetic particle damage device, an eddy current wave detector, and X-ray inspection. In addition, aircraft have been managed with regard to metal fatigue simply by the flight time and the take-off and landing frequency (see, for example, PTL 1).

### Citation List

### Patent Literature

[PTL 1] Japanese Patent No. 4875661

### Summary of Invention

### Technical Problem

By the way, in recent years, an adhesion structure of a composite material in which a reinforcing fiber is infiltrated with a resin has been used for an aircraft str uctures so that the structure can be further reduced in weight. In a case where the body is the adhesion structure, delamination may occur in the adhesion structure by the aircraft receiving various loads from the body. However, the device and the method of PTL 1 do not assume the case where the aircraft body is the adhesion structure and are problematic in that it is impossible to diagnose the delamination of the adhesion structure in the aircraft str uctures, the progress of the delamination, and the like.

The present invention has been made in view of the above, and an object of the present invention is to provide an aircraft health diagnostic device and an aircraft health diagnostic method that enable diagnosis of debonding, detachment, delamination and the progress or the like of debonding, delamination and delamination in an adhesion portion in the structure of an aircraft in a case where the aircraft structure has the adhesion portion.

### Solution to Problem

In order to solve the above-described problems and achieve the object, an aircraft health diagnostic device includes a measuring instrument provided in an aircraft and acquiring measurement data related to the aircraft, a storage unit storing reference data as a diagnostic reference for the measurement data, and a control unit performing structural health monitoring on the aircraft on the basis of the measurement data and the reference data. The control unit includes a first risk evaluation unit evaluating a risk of damage occurrence in the structure on the basis of a correlation between signal data calculated on the basis of the measurement data and the reference data, a second risk evaluation unit evaluating the risk of damage occurrence in the structure on the basis of a behavior of a time-series change in the signal data in which the first risk evaluation unit has evaluated that there is the risk of damage occurrence, and a maintenance evaluation unit evaluating a life of the structure, a repair timing, and a maintenance plan on the basis of the behavior of the time-series change in the signal data used in the second risk evaluation unit.

According to this configuration, the first risk evaluation unit evaluates the risk of damage occurrence in the structure on the basis of the correlation between the measurement-based signal data and the reference data as a reference. Accordingly, it is possible to appropriately extract the possibility of an irreversible structural change such as delamination of the adhesion portion in the structure of the aircraft and the progress of delamination. In addition, the second risk evaluation unit evaluates the risk of damage occurrence in the structure on the basis of the behavior of a time-series change in the signal data in which the first risk evaluation unit has evaluated that there is a damage occurrence risk. Accordingly, it is possible to appropriately diagnose whether or not the state evaluated by the first risk evaluation unit as having a damage occurrence risk is an irreversible structural change. In addition, the maintenance evaluation unit evaluates the life of the structure, a repair timing, and a maintenance plan on the basis of the behavior of a time-series change in the signal data used in the second risk evaluation unit. Accordingly, it is possible to estimate the life of the structure, a repair timing, and a maintenance plan with high accuracy.

In this configuration, it is preferable that the control unit includes a first control unit provided in the aircraft and including the first risk evaluation unit, a second control unit provided outside the aircraft and including the second risk evaluation unit and the maintenance evaluation unit, and an information communication unit performing information communication between the first control unit and the second control unit. According to this configuration, the possibility of an irreversible structural change can be extracted in real time during the flight of the aircraft by the first risk evaluation unit and whether or not a state evaluated by the first risk evaluation unit as having a damage occurrence risk is an irreversible structural change can be diagnosed in a period when it is possible to process data on a time-series change during the operation of aircraft. Accordingly, it is possible to diagnose, for example, the delamination of the adhesion portion in the structure of the aircraft and the progress of the delamination in a time-efficient manner.

In these configurations, it is preferable that the measuring instrument measures the measurement data at a plurality of positions of the structure and a plurality of times, also measures environmental data at the positions of the structure and the times, and associates the measurement data and the environmental data with each other, the storage unit stores the reference data set for each environment assumed as the environmental data at the plurality of positions of the structure where the measurement data is measured, and the control unit calculates the signal data at the plurality of positions of the structure and the plurality of times on the basis of the measurement data in a state of being associated with the environmental data. According to this configuration, the correlation between the signal data and the reference data can be used for the structure damage occurrence risk evaluation in a state where the environmental data is matched, and thus an irreversible structural change in the aircraft structure can be more accurately diagnosed.

In these configurations, it is preferable that the first risk evaluation unit calculates a health index value on the basis of the signal data and evaluates whether the health index value does not exceed a range defined in determination criteria acquired from the storage unit. According to this configuration, the risk of damage occurrence in the structure is evaluated by means of the health index value, which is an index indicating the degree of deviation of the signal data from normality, and thus the possibility of an irreversible structural change in the structure of the aircraft can be extracted with high accuracy.

In the configuration in which the first risk evaluation unit performs evaluation by using the health index value, it is preferable that the second risk evaluation unit evaluates whether the health index value does not exceed the range defined in the determination criteria acquired from the storage unit for at least a period defined in the determination criteria in a time-series change in the health index value. According to this configuration, the risk of damage occurrence in the structure is evaluated by means of the health index value, which is an index indicating the degree of deviation of the signal data from normality, and thus an irreversible structural change in the structure of the aircraft can be diagnosed with high accuracy.

In these configurations, it is preferable that the measuring instrument includes an optical fiber extending around the structure and an optical fiber strain measuring instrument measuring strain data on the structure around which the optical fiber is extended by measuring a strain of the optical fiber. According to this configuration, it is possible to measure a strain distribution having a high spatial resolution at a high speed by Brillouin optical correlation domain analysis by using the Brillouin scattered light generated at each point of the optical fiber extending around the structure. As a result, an irreversible structural change in the structure of the aircraft can be diagnosed at a high speed and a high spatial resolution.

In order to solve the above-described problems and achieve the object, an aircraft health diagnostic method includes a measurement data acquisition step of acquiring measurement data related to an aircraft, a first risk evaluation step of evaluating a risk of damage occurrence in a structure of the aircraft on the basis of a correlation between signal data calculated on the basis of the measurement data and reference data, a second risk evaluation step of evaluating the risk of damage occurrence in the structure on the basis of a behavior of a time-series change in the signal data in which it has been evaluated in the first risk evaluation step that there is the risk of damage occurrence, and a maintenance evaluation step of evaluating a life of the structure, a repair timing, and a maintenance plan on the basis of the behavior of the time-series change in the signal data used in the second risk evaluation step.

According to this configuration, the risk of damage occurrence in the structure is evaluated in the first risk evaluation step on the basis of the correlation between the measurement-based signal data and the reference data as a reference. Accordingly, it is possible to appropriately extract the possibility of an irreversible structural change such as delamination of the adhesion portion in the structure of the aircraft and the progress of delamination. In addition, the risk of damage occurrence in the structure is evaluated in the second risk evaluation step on the basis of the behavior of a time-series change in the signal data in which it has been evaluated in the first risk evaluation step that there is a damage occurrence risk. Accordingly, it is possible to appropriately diagnose whether or not the state evaluated in the first risk evaluation step as having a damage occurrence risk is an irreversible structural change. In addition, the life of the structure, a repair timing, and a maintenance plan are evaluated in the maintenance evaluation step on the basis of the behavior of a time-series change in the signal data used in the second risk evaluation step. Accordingly, it is possible to estimate the life of the structure, a repair timing, and a maintenance plan with high accuracy.

### Advantageous Effects of Invention

According to the present invention, it is possible to provide an aircraft health diagnostic device and an aircraft health diagnostic method that enable diagnosis of delamination and the progress or the like of delamination of an adhesion portion in the structure of an aircraft in a case where the aircraft structure has the adhesion portion.

### Brief Description of Drawings

Fig. 1 is a schematic configuration diagram of an aircraft health diagnostic device according to a first embodiment of the present invention.
Fig. 2 is a configuration diagram illustrating an example of the details of a structure in Fig. 1.
Fig. 3 is a configuration diagram illustrating an example of the details of the structure and a measuring instrument in Fig. 1.
Fig. 4 is a configuration diagram illustrating an example of the details of a first risk evaluation unit and a first storage unit in Fig. 1.
Fig. 5 is a configuration diagram illustrating an example of the details of a second risk evaluation unit and a second storage unit in Fig. 1.
Fig. 6 is a flowchart of an aircraft health diagnostic method according to the first embodiment of the present invention.
Fig. 7 is a diagram illustrating an example of measurement data in Fig. 4.
Fig. 8 is an explanatory diagram illustrating the measurement data in Fig. 4.
Fig. 9 is a flowchart illustrating the details of a first risk evaluation step in Fig. 6.
Fig. 10 is a diagram illustrating an example of a damage location in the structure in Fig. 1.
Fig. 11 is a diagram illustrating an example of reference data at the location in Fig. 10.
Fig. 12 is a diagram illustrating an example of the measurement data at the location in Fig. 10.
Fig. 13 is an explanatory diagram illustrating the calculation of characteristic value data from the measurement data at the location in Fig. 10.
Fig. 14 is a diagram illustrating the characteristic value data at the location in Fig. 10 and reference data obtained by conversion into a characteristic value.
Fig. 15 is a diagram illustrating an example of the characteristic value data in Fig. 4.
Fig. 16 is a diagram illustrating an example of a temporary signal data set in Fig. 4.
Fig. 17 is an explanatory diagram illustrating a normality-abnormality determination step in Fig. 9 and a second risk evaluation step in Fig. 6.
Fig. 18 is a flowchart illustrating the details of the second risk evaluation step in Fig. 6.
Fig. 19 is an explanatory diagram illustrating a damage factor analysis step in Fig. 18.
Fig. 20 is an explanatory diagram illustrating a damage information display step in Fig. 18.

### Description of Embodiments

Hereinafter, embodiments according to the present invention will be described in detail with reference to the drawings. It should be noted that the present invention is not limited to the embodiments. In addition, the constituent elements in the embodiments include those that can be easily replaced by those skilled in the art or those that are substantially the same. Further, the constituent elements described below can be appropriately combined.

### [First Embodiment]

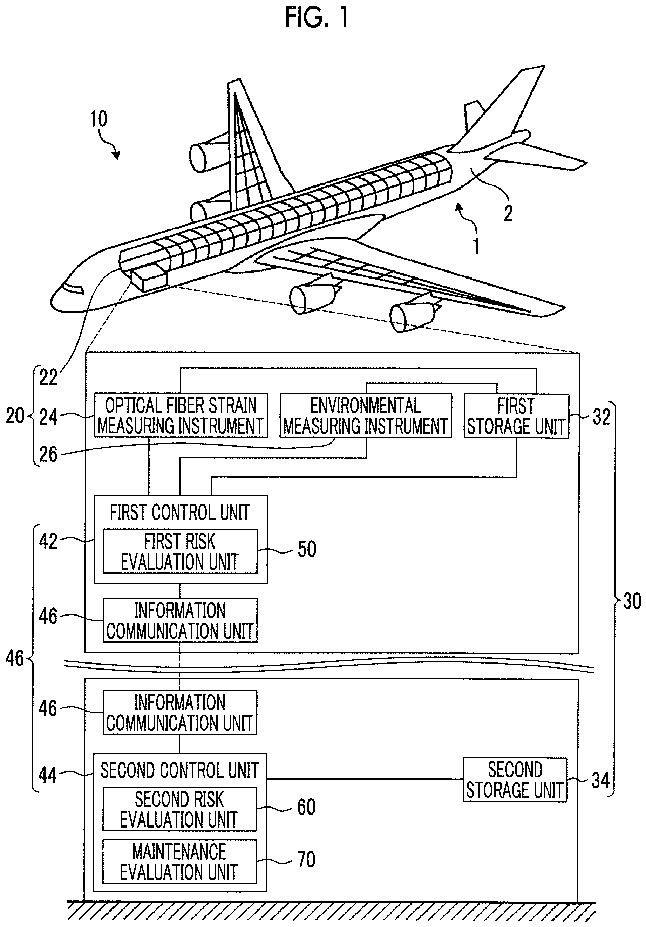

Fig. 1 is a schematic configuration diagram of an aircraft health diagnostic device 10 according to a first embodiment of the present invention. The aircraft health diagnostic device 10 performs structural health monitoring (structural health monitoring (SHM)) on a structure 2 of an aircraft 1. In other words, the aircraft health diagnostic device 10 is a device that diagnoses whether or not the structure of the structure 2 of the aircraft 1 is in a sound state and evaluates the risk of damage occurrence in the structure 2. Here, the structure 2 refers to the structural portions of the aircraft 1 and includes, for example, a fuselage portion, a main wing portion, a tail wing portion, a panel-fastener joining part of a basic component of each structural portion, and a reinforcing material adhesion portion. In addition, the damage refers to a physically irreversible structural change. Specifically, examples of the damage include delamination that constantly causes a structural defect in the structure 2.

As illustrated in Fig. 1, the aircraft health diagnostic device 10 includes a measuring instrument 20, a storage unit 30, and a control unit 40. The storage unit 30 includes a first storage unit 32 and a second storage unit 34. The control unit 40 includes a first control unit 42, a second control unit 44, and an information communication unit 46. The first storage unit 32 and the first control unit 42 are provided inside the aircraft 1. The second storage unit 34 and the second control unit 44 are provided outside the aircraft 1. For example, the second storage unit 34 and the second control unit 44 are provided at an airport. The information communication unit 46 is a pair of communication devices performing information communication with each other. One of the devices is provided inside the aircraft 1 or the outer wall of the structure 2 of the aircraft 1. The other device is provided outside the aircraft 1, examples of which include an airport.

The first control unit 42 is electrically connected to the measuring instrument 20, the first storage unit 32, and the information communication unit 46 so as to be capable of performing information communication with the measuring instrument 20, the first storage unit 32, and the information communication unit 46. The first control unit 42 controls the operation of the measuring instrument 20. The second control unit 44 is electrically connected to the second storage unit 34 and the information communication unit 46 so as to be capable of performing information communication with the second storage unit 34 and the information communication unit 46. The information communication unit 46 wirelessly interconnects the first control unit 42 and the second control unit 44 such that the first control unit 42 and the second control unit 44 are capable of performing information communication with each other. The first control unit 42 includes a first risk evaluation unit 50. The second control unit 44 includes a second risk evaluation unit 60 and a maintenance evaluation unit 70.

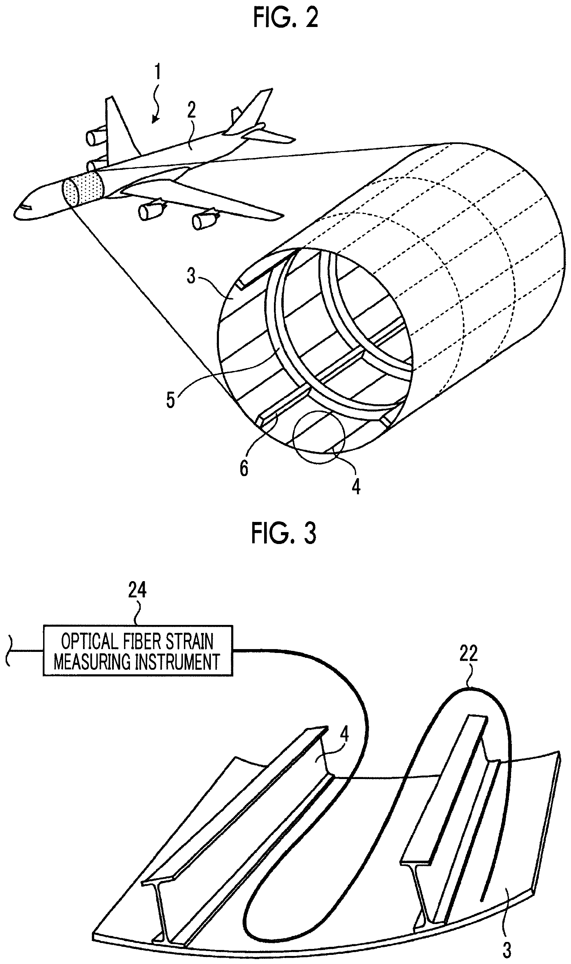

Fig. 2 is a configuration diagram illustrating an example of the details of the structure 2 in Fig. 1. As illustrated in Fig. 2, the structure 2 is exemplified by a semi-monocoque structure in which the fuselage portion includes a skin 3, stringers 4, a frame 5, and a longillon 6. The skin 3 is disposed so as to cover the fuselage portion and forms a substantially cylindrical shape. The skin 3, which is light in weight and high in strength, is exemplified by a composite material in which a reinforcing fiber such as a carbon fiber is infiltrated with a thermosetting resin such as an epoxy resin and cured.

The stringers 4 are arranged inside the skin 3 at predetermined intervals along the axial direction of the cylindrical shape formed by the skin 3 and support the skin 3 from the inside. The frame 5 is arranged inside the skin 3 and the stringers 4 along the circumferential direction of the cylindrical shape formed by the skin 3 with an interval wider than the interval between the stringers 4 and supports the skin 3 and the stringers 4 from the inside. The skin 3, the stringer 4, and the frame 5 are joined together by means of a shear tie and a strap. A member that is physically stronger than the stringer 4 is used for the longillon 6. The longillon 6 is provided at a location inside the skin 3 where the stringer 4 cannot be provided by a door or a window provided in the fuselage portion of the structure 2 and supports the skin 3 from the inside.

It should be noted that the structure 2 according to the present invention is not limited to a structure employing the semi-monocoque structure and may be a structure employing another adhesion portion such as a truss structure (canvas), a truss structure (corrugated metal sheet), and a monocoque structure.

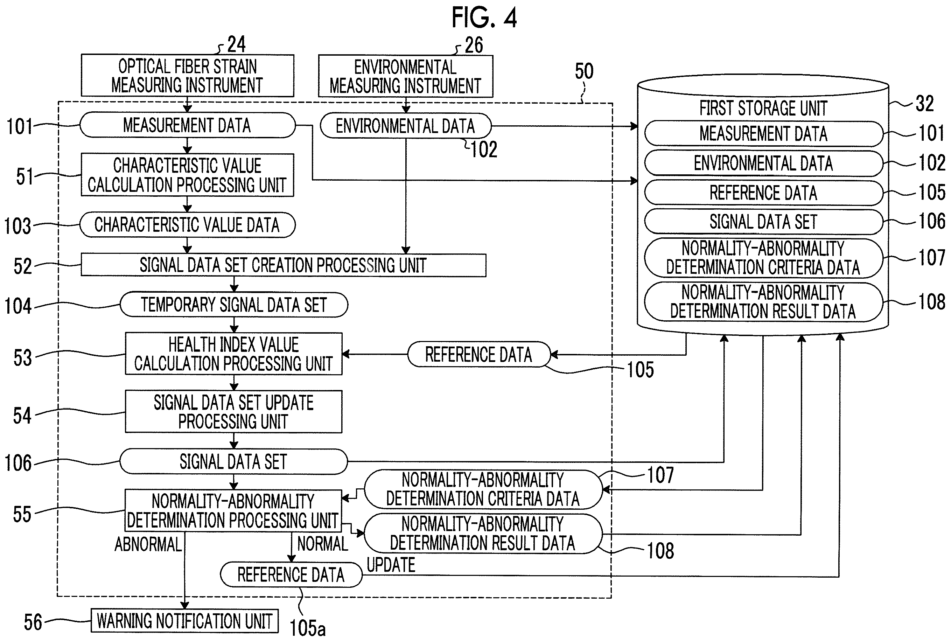

The measuring instrument 20 is provided inside the aircraft 1 or the outer wall of the structure 2 of the aircraft 1. As illustrated in Fig. 1, the measuring instrument 20 includes an optical fiber 22, an optical fiber strain measuring instrument 24, and an environmental measuring instrument 26. In the measuring instrument 20, the optical fiber strain measuring instrument 24 and the environmental measuring instrument 26 are controlled by the first control unit 42. Under the control of the first control unit 42, the optical fiber strain measuring instrument 24 acquires measurement data 101 (see Fig. 4 and the like) related to the aircraft 1 at regular intervals. The measurement data 101 is a data set associated with a position distribution in a measurement range and a time change at each position. Under the control of the first control unit 42, the environmental measuring instrument 26 acquires environmental data 102 (see Fig. 4 and the like) at regular intervals. The environmental data 102 is flight-related data such as the atmospheric pressure and the flight posture, the acceleration, and the weight of the structure 2 of the aircraft 1. The environmental data 102 is a data set associated with a time change. It is preferable that the timing at which the optical fiber strain measuring instrument 24 acquires the measurement data 101 and the timing at which the environmental measuring instrument 26 acquires the environmental data 102, which may be different from each other, are synchronized with each other.

The optical fiber 22 is provided so as to be extended around the structure 2. Both ends of the optical fiber 22 are connected to the optical fiber strain measuring instrument 24. The optical fiber strain measuring instrument 24 is capable of measuring a strain distribution having a high spatial resolution over the entire area of the structure 2 at a high speed by Brillouin optical correlation domain analysis (BOCDA) by using the Brillouin scattered light generated at each point of the optical fiber 22. Examples of the environmental measuring instrument 26 include a three-dimensional accelerometer and a barometer capable of measuring, for example, the atmospheric pressure and the flight posture, the acceleration, and the weight of the structure 2 of the aircraft 1.

The measuring instrument 20 may be, for example, optical means, an acoustic sensor, a conductive strain gauge, or a thin film-type pressure sensor capable of measuring another strain distribution without the optical fiber 22 and the optical fiber strain measuring instrument 24 being limited to this form. In addition, the measuring instrument 20 is not limited to the form that measures a strain distribution. For example, the measuring instrument 20 may measure a physical quantity related to structural damage such as temperature and pressure (stress). Specifically, the measuring instrument 20 may be, for example, a thermometer capable of measuring the temperature distribution in the entire area of the structure 2 in addition to the form for strain distribution measurement. In addition, the measuring instrument 20 may be, for example, a form capable of measuring physical quantities related to a plurality of types of structural damage in which the form for strain distribution measurement and the form for measuring another distribution such as the temperature distribution are present together.

Fig. 3 is a configuration diagram illustrating an example of the details of the structure 2 and the measuring instrument 20 in Fig. 1. As illustrated in Fig. 3, the optical fiber 22 constituting the measuring instrument 20 is provided in a wavy manner so as to cover the inside of the skin 3, avoid the stringer 4, and include the vicinity of the stringer 4. Since the optical fiber 22 is provided in this manner, it is possible to measure a strain distribution having a high spatial resolution over the entire surface of the skin 3 and measure the strain distribution of the adhesion portion between the skin 3 and the stringer 4.

Fig. 4 is a configuration diagram illustrating an example of the details of the first risk evaluation unit 50 and the first storage unit 32 in Fig. 1. As illustrated in Fig. 4, the first storage unit 32 stores the measurement data 101, the environmental data 102, reference data 105, a signal data set 106, normality-abnormality determination criteria data 107, and normality-abnormality determination result data 108.

The measurement data 101 is related to the structure 2 of the aircraft 1 and is obtained by measurement by the measuring instrument 20. Exemplified in the present embodiment is the measurement data 101 on the strain of the structure 2 measured by the optical fiber 22 and the optical fiber strain measuring instrument 24. The measurement data 101 is not limited thereto. The measurement data 101 may be measurement data on the temperature of the structure 2 or may include data related to the bodies 2 of a plurality of the aircraft 1. The measurement data 101 is a data set associated with a position distribution in a measurement range and a time change at each position.

The environmental data 102 is measured by the environmental measuring instrument 26. The environmental data 102 is flight-related data such as the atmospheric pressure and the flight posture, the acceleration, and the weight of the structure 2 of the aircraft 1. The first risk evaluation unit 50 uses the reference data 105 as a diagnostic reference for the measurement data 101. Adopted as an example of the reference data 105 is data based on the measurement data 101 obtained by measuring the structure 2 pre-diagnosed as normal in terms of health of the structure 2 under assumed environmental data. The reference data 105 is pre-stored in the first storage unit 32. In addition, the reference data 105 can be updated with new reference data 105a diagnosed as normal by the first risk evaluation unit 50.

The first risk evaluation unit 50 creates the signal data set 106 on the basis of the measurement data 101, the environmental data 102, and the reference data 105. The first risk evaluation unit 50 evaluates the risk of damage occurrence in the structure 2 on the basis of the signal data set 106. The normality-abnormality determination criteria data 107 is used as determination criteria when the first risk evaluation unit 50 evaluates the risk of damage occurrence in the structure 2 on the basis of the signal data set 106. The normality-abnormality determination result data 108, which is determination result data, is obtained by the first risk evaluation unit 50 evaluating the risk of damage occurrence in the structure 2 on the basis of the signal data set 106.

The first storage unit 32 includes a storage device such as a RAM, a ROM, and a flash memory. The first storage unit 32 stores not only the various data described above but also, for example, aircraft health diagnostic software processed by the first control unit 42, an aircraft health diagnostic program, and data referred to by the aircraft health diagnostic software and the aircraft health diagnostic program. In addition, the first storage unit 32 functions as a storage area in which the first control unit 42 temporarily stores a processing result and the like.

As illustrated in Fig. 4, the first risk evaluation unit 50 includes a characteristic value calculation processing unit 51, a signal data set creation processing unit 52, a health index value calculation processing unit 53, a signal data set update processing unit 54, and a normality-abnormality determination processing unit 55. The first risk evaluation unit 50 is electrically connected to a warning notification unit 56 so as to be capable of performing information communication with the warning notification unit 56.

The characteristic value calculation processing unit 51 acquires characteristic value data 103 from the measurement data 101 acquired from the optical fiber strain measuring instrument 24 by performing calculation processing into a statistical feature value matching the physical model of the sound state of the structure 2 of the aircraft 1. As in the case of the measurement data 101, the characteristic value data 103 is a data set associated with a position distribution in a measurement range and a time change at each position. Here, the statistical feature value is exemplified by a variance value, an average value, and a median value. Specifically, the characteristic value data 103 is calculated at measurement locations or measurement sections in a plurality of measurement ranges and is calculated at a plurality of certain time intervals. Each of the calculated data is created by being associated with the position information on the measurement location or the measurement section in the measurement range and the time stamp of the certain time interval. The characteristic value calculation processing unit 51 is capable of enhancing the accuracy of damage possibility extraction by calculation processing the measurement data 101 into the characteristic value data 103.

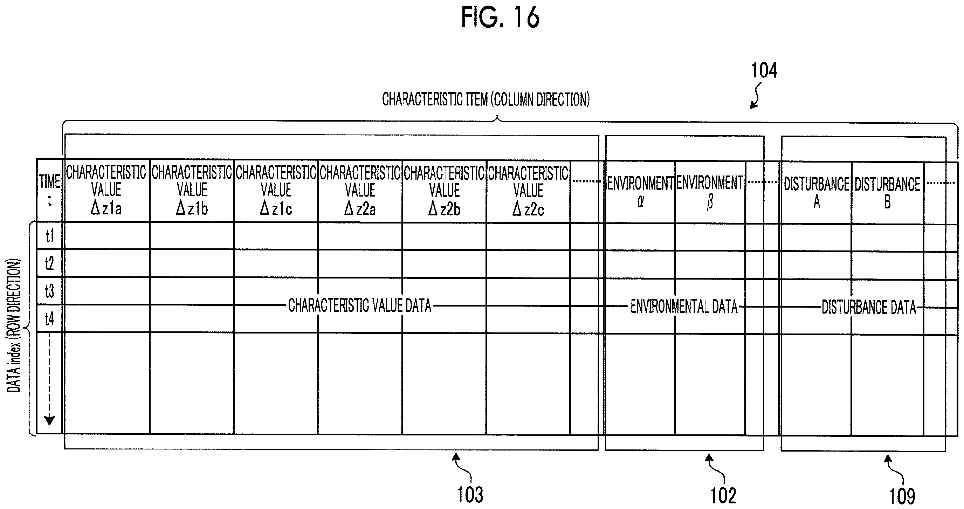

The signal data set creation processing unit 52 creates a temporary signal data set 104, which is a temporary state of the signal data set 106, by matching the characteristic value data 103 acquired from the characteristic value calculation processing unit 51, the environmental data 102 acquired from the environmental measuring instrument 26, and disturbance data 109 (see Fig. 16) so as to be associated with the same time change. Here, the disturbance data 109 is data such as temperature as a disturbance physical quantity affecting the measurement data 101. Preferably used as the disturbance data 109 is data measured by a thermometer provided in addition to the measuring instrument 20.

The health index value calculation processing unit 53 calculates a health index value by performing calculation processing on the basis of the temporary signal data set 104 acquired from the signal data set creation processing unit 52 and the reference data 105 acquired from the first storage unit 32. Specifically, the health index value calculation processing unit 53 calculates the state of deviation of the temporary signal data set 104 from the reference data 105 as a unified health index value by executing predetermined statistical calculation processing.

The health index value calculation processing unit 53 handles the temporary signal data set 104 and the reference data 105 as multivariate data with N data (rows) having M dimensions (columns) of characteristic items and processes the multivariate data by the Mahalanobis Taguchi method (hereinafter, referred to as the MT method), which is a data processing method based on the theory of quality engineering. Specifically, the health index value calculation processing unit 53 calculates, as the health index value, the Mahalanobis distance (hereinafter, referred to as the MD value) representing the degree of deviation of the temporary signal data set 104 from the reference data 105 by using the reference data 105 as a normal state, that is, a reference. It should be noted that a smaller MD value represents being closer to the normal state and a larger MD value represents being farther from the normal state with a higher level of anomaly. In addition to the MT method, there is a method by which one or both of a T² statistical value and a Q statistical value are used as anomaly-indicating indices. It should be noted that "Introduction, Anomaly Detection by Machine Learning, Written by Ide, Corona Publishing", "Soft Sensor Introduction", "Kimito Funatsu, co-authored by Hiromasa Kaneko, published by Corona," and the like are preferably employed with regard to calculation method details regarding the Mahalanobis Taguchi method, the Mahalanobis distance, or the T² statistical value and the Q statistical value.

The signal data set update processing unit 54 creates the signal data set 106 by matching the temporary signal data set 104 acquired from the health index value calculation processing unit 53 and the MD value as the health index value so as to be associated with the same time change.

The normality-abnormality determination processing unit 55 determines, on the basis of the signal data set 106 acquired from the signal data set update processing unit 54 and the normality-abnormality determination criteria data 107 acquired from the first storage unit 32, which part of the structure 2 of the aircraft 1 is structurally normal and which part of the structure 2 of the aircraft 1 is likely to be structurally abnormal without being structurally normal when the measurement data 101 as the basis of the signal data set 106 is measured.

Specifically, the normality-abnormality determination processing unit 55 first evaluates, with determination criteria based on the normality-abnormality determination criteria data 107, which part of the signal data set 106 is in a normal state and which part of the signal data set 106 is in an abnormal state. Next, the normality-abnormality determination processing unit 55 evaluates that the part of the structure 2 of the aircraft 1 to which the normal part of the signal data set 106 corresponds is in a structurally normal state and evaluates that the part of the structure 2 of the aircraft 1 to which the abnormal part of the signal data set 106 corresponds is likely to be in a structurally abnormal state. Then, the normality-abnormality determination processing unit 55 creates the normality-abnormality determination result data 108 based on the determination result.

In a case where the normality-abnormality determination processing unit 55 determines that no part is likely to be abnormal, the normality-abnormality determination processing unit 55 creates the new reference data 105a on the basis of the entire signal data set 106. In addition, the normality-abnormality determination processing unit 55 determines that there is no need for the second risk evaluation unit 60 to evaluate the risk of damage occurrence in the structure 2. In this case, the second risk evaluation unit 60 does not evaluate the risk of damage occurrence in the structure 2 and the damage occurrence risk evaluation is ended simply by the first risk evaluation unit 50 evaluating the risk of damage occurrence in the structure 2.

In a case where the normality-abnormality determination processing unit 55 determines that there is a part likely to be abnormal, the normality-abnormality determination processing unit 55 causes the warning notification unit 56 to perform alarm notification indicating that the determination that there is a part likely to be abnormal has been made and creates the new reference data 105a on the basis of the signal data set 106 of the part determined to be normal. In addition, the normality-abnormality determination processing unit 55 determines that there is a need for the second risk evaluation unit 60 to evaluate the risk of damage occurrence in the structure 2. In this case, the risk of damage occurrence in the structure 2 is evaluated by the second risk evaluation unit 60.

The normality-abnormality determination criteria data 107 used by the normality-abnormality determination processing unit 55 indicates the relationship between the health index value calculation method and the ranges in which the health index value is defined as normal and abnormal. For example, in a case where the MT method is employed as the health index value calculation method, the normality-abnormality determination criteria data 107 used by the normality-abnormality determination processing unit 55 indicates determination criteria that the MD value as the health index value is normal within a range not exceeding a predetermined threshold value and abnormal within a range not less than the predetermined threshold value.

In a case where the normality-abnormality determination processing unit 55 determines the possibility of whether or not the structure 2 of the aircraft 1 is structurally normal on the basis of the signal data set 106 in which the MD value is matched as the health index value, the normality-abnormality determination processing unit 55 determines that the structure 2 is normal unless every MD value exceeds a predetermined threshold value and determines, when a part of the MD value is not less than the predetermined threshold value, that the part is likely to be abnormal and the other part is normal.

As described above, the first risk evaluation unit 50 evaluates whether or not the structure 2 of the aircraft 1 has a damage occurrence risk by extracting the possibility of a structurally abnormal state in the structure 2 of the aircraft 1, that is, the possibility of an irreversible structural change on the basis of the correlation between the reference data 105 and the temporary signal data set 104, which is temporary signal data calculated on the basis of the measurement data 101.

In a case where the normality-abnormality determination processing unit 55 determines on the basis of the signal data set 106 that there is a part likely to be abnormal, the warning notification unit 56 acquires, from the normality-abnormality determination processing unit 55, a command for alarm notification that it has been determined that there is a part likely to be abnormal and notifies the alarm to that effect. Examples of the warning notification unit 56 include a sound notification device for notification by sound, a light notification device for notification by light that is turned on or blinks, and a combined notification device for notification by both sound and light.

The first control unit 42 includes a processing device such as a CPU, reads the aircraft health diagnostic software, the aircraft health diagnostic program, and the like from the first storage unit 32, and processes the software, the program, and the like. In this manner, the first control unit 42 exhibits a function in accordance with the aircraft health diagnostic software and the aircraft health diagnostic program. Specifically, the first control unit 42 exhibits, for example, the control function of the measuring instrument 20 and the processing function of the first risk evaluation unit 50. The functions enable a partial execution of the aircraft health diagnostic method executed by the first control unit 42. The processing function of the first risk evaluation unit 50 includes, for example, the processing functions of the characteristic value calculation processing unit 51, the signal data set creation processing unit 52, the health index value calculation processing unit 53, the signal data set update processing unit 54, and the normality-abnormality determination processing unit 55.

The first storage unit 32 and the first control unit 42 are exemplified by one computer in which a storage device and a processing device are integrated. It should be noted that the first storage unit 32 and the first control unit 42 are not limited to the form realized by one computer and the form may be replaced with a form realized on the basis of separation without integration or a form realized by two or more computers.

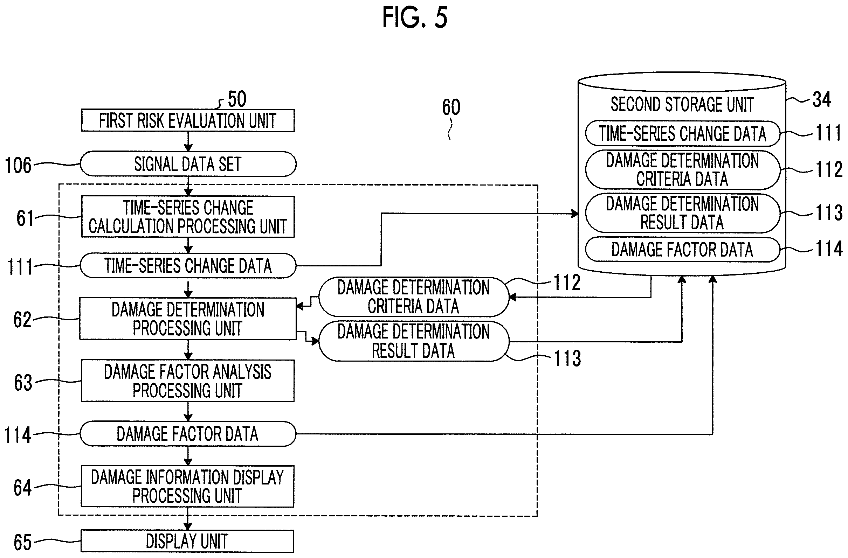

Fig. 5 is a configuration diagram illustrating an example of the details of the second risk evaluation unit 60 and the second storage unit 34 in Fig. 1. As illustrated in Fig. 5, the second storage unit 34 stores time-series change data 111, damage determination criteria data 112, damage determination result data 113, and damage factor data 114.

The time-series change data 111 indicates the behavior of a time-series change regarding the signal data set 106 in which the first risk evaluation unit 50 has determined that there is a part likely to be abnormal, that is, the first risk evaluation unit 50 has evaluated that there is a damage occurrence risk. The damage determination criteria data 112 is used as determination criteria when the second risk evaluation unit 60 evaluates the risk of damage occurrence in the structure 2 on the basis of the time-series change data 111. The damage determination result data 113, which is determination result data, is obtained by the second risk evaluation unit 60 evaluating the risk of damage occurrence in the structure 2 on the basis of the time-series change data 111. The damage factor data 114, which is analysis result data on a damage factor of the structure 2, is obtained by the second risk evaluation unit 60 analyzing the damage factor of the structure 2 on the basis of the time-series change data 111.

The second storage unit 34 includes a storage device such as a RAM, a ROM, and a flash memory. The second storage unit 34 stores not only the various data described above but also, for example, aircraft health diagnostic software processed by the second control unit 44, an aircraft health diagnostic program, and data referred to by the aircraft health diagnostic software and the aircraft health diagnostic program. In addition, the second storage unit 34 functions as a storage area in which the second control unit 44 temporarily stores a processing result and the like.

As illustrated in Fig. 5, the second risk evaluation unit 60 includes a time-series change calculation processing unit 61, a damage determination processing unit 62, a damage factor analysis processing unit 63, and a damage information display processing unit 64. The second risk evaluation unit 60 is electrically connected to a display unit 65 so as to be capable of performing information communication with the display unit 65.

The time-series change calculation processing unit 61 creates the time-series change data 111 on the basis of the signal data set 106 that has been acquired via the information communication unit 46 from the first risk evaluation unit 50 and in which the first risk evaluation unit 50 has evaluated that there is a damage occurrence risk. Specifically, the time-series change calculation processing unit 61 creates data indicating the behavior of a time-series change regarding at least one of the health index value and various values included in the characteristic value data 103, which are included in the signal data set 106, and uses the data as the time-series change data 111.

The damage determination processing unit 62 determines, on the basis of the time-series change data 111 acquired from the time-series change calculation processing unit 61 and the damage determination criteria data 112 acquired from the second storage unit 34, which part of the structure 2 of the aircraft 1 is in a normal state where no irreversible structural change is observed and which part of the structure 2 of the aircraft 1 is in an abnormal state where an irreversible structural change is observed when the measurement data 101 as the basis of the time-series change data 111 is measured.

Specifically, the damage determination processing unit 62 first evaluates, with determination criteria based on the damage determination criteria data 112, which part of the time-series change data 111 is in a normal state and which part of the time-series change data 111 is in an abnormal state. Next, the damage determination processing unit 62 evaluates that the part of the structure 2 of the aircraft 1 to which the normal part of the time-series change data 111 corresponds is in a structurally normal state and evaluates that the part of the structure 2 of the aircraft 1 to which the abnormal part of the time-series change data 111 corresponds is in a structurally abnormal state. Then, the damage determination processing unit 62 creates the damage determination result data 113 based on the determination result.

In a case where the damage determination processing unit 62 determines that no part is abnormal, the damage determination processing unit 62 causes the damage information display processing unit 64 to create a display screen indicating that no part is abnormal. The damage information display processing unit 64 causes the display unit 65 to display the display screen indicating that no part is abnormal and ends the evaluation of the risk of damage occurrence in the structure 2 by the second risk evaluation unit 60.

In a case where the damage determination processing unit 62 determines that there is an abnormal part, the damage determination processing unit 62 causes the damage factor analysis processing unit 63 to analyze the damage factor that is in the abnormal state. Here, the damage factor refers to a factor at the time of a significant change in health index, that is, a factor in a statistical sense and refers to a data variable. The damage factor analysis processing unit 63 processes a feature value associated with a measurement position as a variable, and thus the damage factor analysis processing unit 63 performs processing for specifying the feature value associated with the measurement position and simultaneously performing analysis for specifying a damage location.

The damage factor analysis processing unit 63 acquires the time-series change data 111 and the damage determination result data 113 from the damage determination processing unit 62, analyzes the damage in an abnormal state and the factor of the damage, and creates the damage factor data 114 based on the analysis result. Then, the damage factor analysis processing unit 63 causes the damage information display processing unit 64 to create a display screen based on the damage factor data 114. The damage information display processing unit 64 causes the display unit 65 to display the display screen based on the damage factor data 114 and ends the evaluation of the risk of damage occurrence in the structure 2 by the second risk evaluation unit 60.

The damage determination criteria data 112 used by the damage determination processing unit 62 indicates the relationship between the value used for the time-series change data 111, the ranges in which the value is defined as normal and abnormal, and the period in which it is defined that there is an abnormal part by continuously taking a value in the range in which the value is defined as abnormal. For example, in a case where the MD value as a health index value calculated by the MT method is used for the time-series change data 111, the damage determination criteria data 112 used by the damage determination processing unit 62 indicates that there is an abnormal part, that is, an irreversible structural change is observed when the MD value continues to take a value in a range equal to or greater than a predetermined threshold value for a predetermined period or longer.

In a case where the damage determination processing unit 62 determines whether or not the structure 2 of the aircraft 1 is structurally normal on the basis of the time-series change data 111, the damage determination processing unit 62 determines that the MD value calculated by the MT method is normal unless the MD value continues to take a value in a range equal to or greater than a predetermined threshold value for a predetermined period or longer and determines, when a part of the MD value continues to take a value in the range equal to or greater than the predetermined threshold value for a predetermined period or longer, that the part is abnormal and the other part is normal.

As described above, the second risk evaluation unit 60 evaluates whether or not the structure 2 of the aircraft 1 has a damage occurrence risk by diagnosing an irreversible structural change in the structure 2 of the aircraft 1 on the basis of the behavior of a time-series change in the signal data set 106 in which the first risk evaluation unit 50 has evaluated that there is a damage occurrence risk.

The maintenance evaluation unit 70 evaluates, for example, the life of the structure 2, a repair timing, and a maintenance plan on the basis of the time-series change data 111 indicating the behavior of a time-series change in the signal data set 106 used in the second risk evaluation unit 60. Specifically, the maintenance evaluation unit 70 calculates the life of the structure 2 by using a remaining life evaluation algorithm on the basis of, for example, the normality-abnormality determination result data 108 in the first risk evaluation unit 50, the damage determination result data 113 in the second risk evaluation unit 60, and the risk evaluation results of the first risk evaluation unit 50 and the second risk evaluation unit 60, calculates a timing close by a predetermined ratio to the calculated life of the structure 2 as a repair timing, and estimates a maintenance plan on the basis of the calculated repair timing.

The second control unit 44 includes a processing device such as a CPU, reads the aircraft health diagnostic software, the aircraft health diagnostic program, and the like from the second storage unit 34, and processes the software, the program, and the like. In this manner, the second control unit 44 exhibits a function in accordance with the aircraft health diagnostic software and the aircraft health diagnostic program. Specifically, the second control unit 44 exhibits, for example, the processing function of the second risk evaluation unit 60 and the processing function of the maintenance evaluation unit 70. The functions enable a partial execution of the aircraft health diagnostic method executed by the second control unit 44. The processing function of the second risk evaluation unit 60 includes, for example, the processing functions of the time-series change calculation processing unit 61, the damage determination processing unit 62, the damage factor analysis processing unit 63, and the damage information display processing unit 64.

The second storage unit 34 and the second control unit 44 are exemplified by one computer in which a storage device and a processing device are integrated. It should be noted that the second storage unit 34 and the second control unit 44 are not limited to the form realized by one computer and the form may be replaced with a form realized on the basis of separation without integration or a form realized by two or more computers.

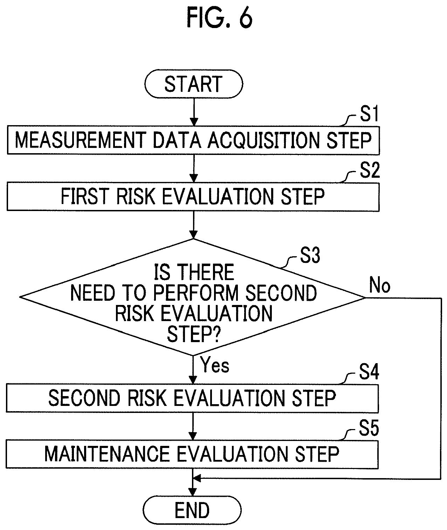

The action of the aircraft health diagnostic device 10 according to the first embodiment having the above-described configuration will be described below. Fig. 6 is a flowchart of the aircraft health diagnostic method according to the first embodiment of the present invention. The aircraft health diagnostic method according to the first embodiment is a processing method executed by the aircraft health diagnostic device 10 according to the first embodiment. The aircraft health diagnostic method according to the first embodiment will be described with reference to Fig. 6. As illustrated in Fig. 6, the aircraft health diagnostic method according to the first embodiment includes a measurement data acquisition step S1, a first risk evaluation step S2, a second risk evaluation step necessity determination step S3, a second risk evaluation step S4, and a maintenance evaluation step S5.

In the measurement data acquisition step S1, the measurement data 101 is acquired by the measuring instrument 20 by the first control unit 42 controlling the measuring instrument 20 during the flight of the aircraft 1. Specifically, in the measurement data acquisition step S1, the first control unit 42 controls the optical fiber strain measuring instrument 24 of the measuring instrument 20 and Brillouin optical correlation domain analysis is used for the Brillouin scattered light generated at various points of the optical fiber 22 by the optical fiber strain measuring instrument 24. Acquired as a result is the measurement data 101 having a strain distribution having a high spatial resolution over the entire area of the structure 2.

In addition to the measurement data acquisition step S1 and during the flight of the aircraft 1, the first control unit 42 controls the measuring instrument 20 and acquires the environmental data 102 by the measuring instrument 20. Specifically, the first control unit 42 controls the environmental measuring instrument 26 of the measuring instrument 20 and acquires the flight-related environmental data 102 such as the atmospheric pressure and the flight posture, the acceleration, and the weight of the structure 2 of the aircraft 1.

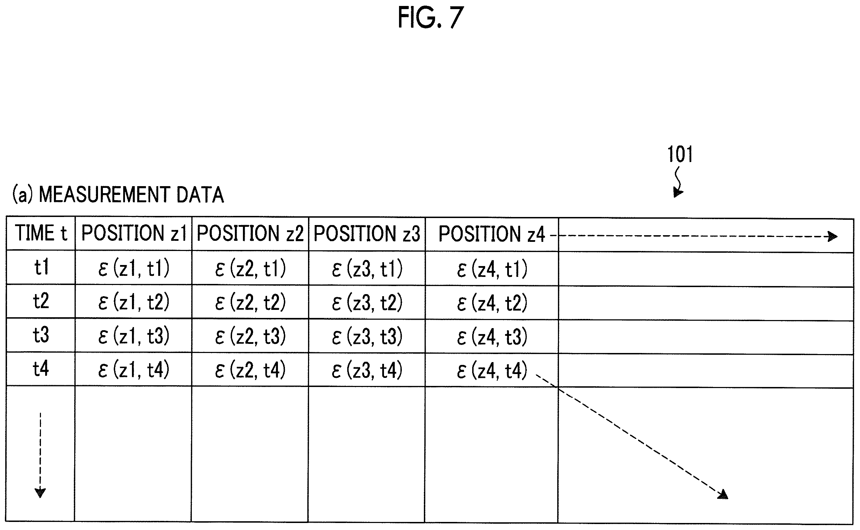

Fig. 7 is a diagram illustrating an example of the measurement data 101 in Fig. 4. As illustrated in Fig. 7, the measurement data 101 is a data set on a strain ε associated with positions z1, z2, z3, z4, ... in a measurement range and times t1, t2, t3, t4, ... at the respective positions.

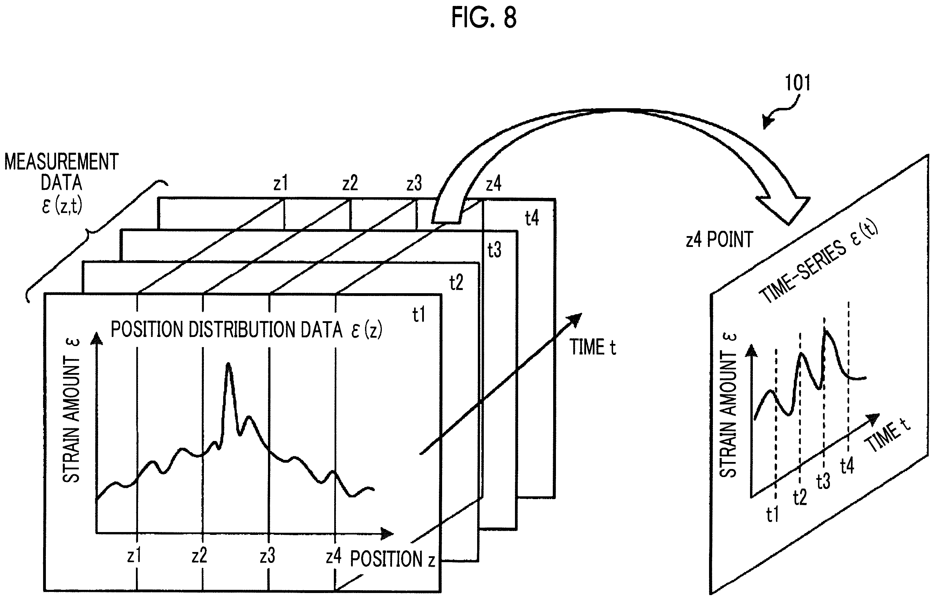

Fig. 8 is an explanatory diagram illustrating the measurement data 101 in Fig. 4. As illustrated in Fig. 8, the measurement data 101 is a data set in which position distribution data ε(z) indicating the dependence at each of the positions z1, z2, z3, z4, ... in the measurement range of the strain ε at time t1, position distribution data ε(z) at time t2, position distribution data ε(z) at time t3, position distribution data ε(z) at time t4, ... and position distribution data ε(z) are bundled. In addition, as illustrated in Fig. 8, the measurement data 101 that is seen at another angle is a data set in which time-series data ε(t) indicating the dependence at each of the times t1, t2, t3, t4, ... in the measurement range of the strain ε at the position z1, time-series data ε(t) at the position z2, time-series data ε(t) at the position z3, time-series data ε(t) at the position z4, ... and the time-series data ε(t) are bundled.

In the first risk evaluation step S2, the first risk evaluation unit 50 included in the first control unit 42 evaluates whether or not the structure 2 of the aircraft 1 has a damage occurrence risk by extracting the possibility of a structurally abnormal state in the structure 2 of the aircraft 1, that is, the possibility of an irreversible structural change by using the measurement data 101.

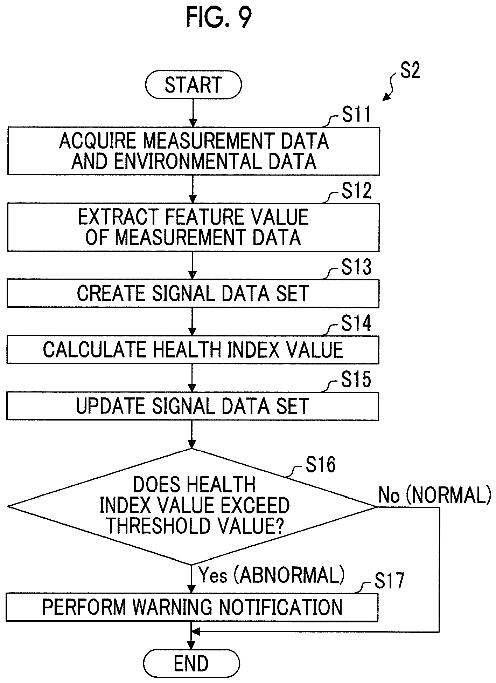

Fig. 9 is a flowchart illustrating the details of the first risk evaluation step S2 in Fig. 6. The details of the first risk evaluation step S2 will be described with reference to Fig. 9. As illustrated in Fig. 9, the first risk evaluation step S2 includes a measurement data and environmental data acquisition step S11, a characteristic value calculation step S12, a signal data set creation step S13, a health index value calculation step S14, a signal data set update step S15, a normality-abnormality determination step S16, and a warning notification step S17.

In the measurement data and environmental data acquisition step S11, the first risk evaluation unit 50 acquires the measurement data 101 acquired by the first control unit 42 in the measurement data acquisition step S1 and the environmental data 102 acquired by the first control unit 42 in conjunction with the measurement data acquisition step S1.

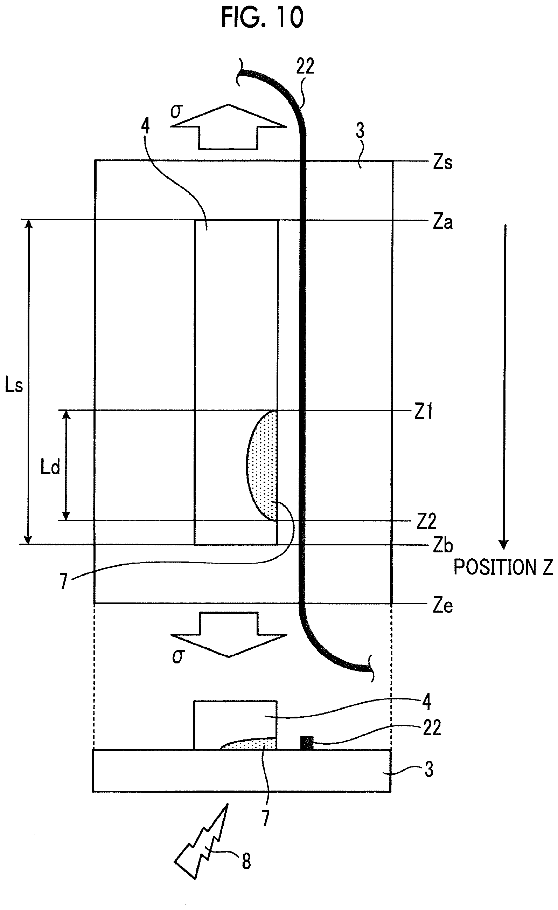

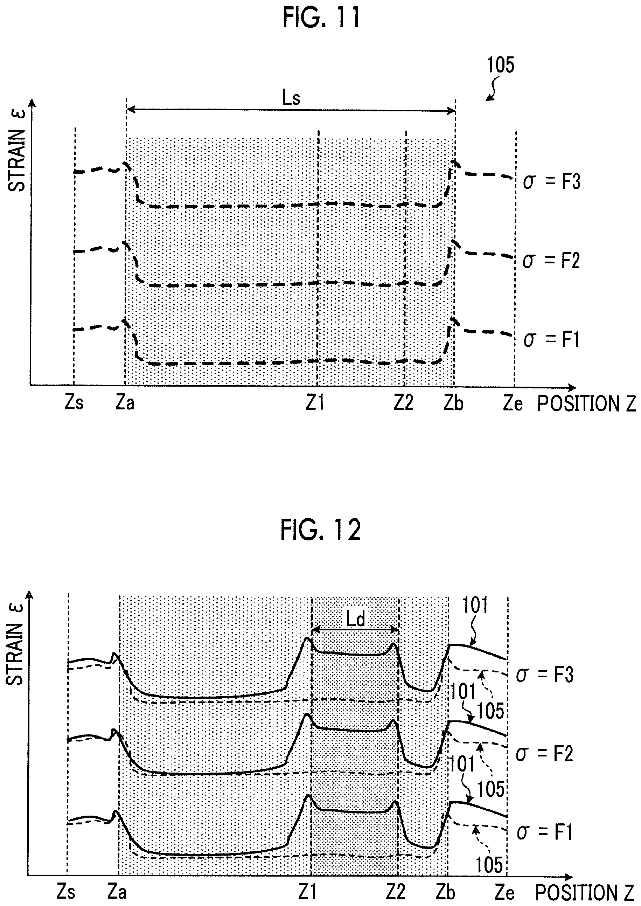

Fig. 10 is a diagram illustrating an example of a damaged location of the structure 2 in Fig. 1. Fig. 11 is a diagram illustrating an example of the reference data 105 at the location in Fig. 10. Fig. 12 is a diagram illustrating an example of the measurement data 101 at the location in Fig. 10. The measurement data and environmental data acquisition step S11 will be described in detail with reference to Figs. 10, 11, and 12.

The location of the structure 2 illustrated in Fig. 10 includes the skin 3, the stringer 4 provided on the skin 3 and having a length Ls, the optical fiber 22 provided along the stringer 4 in the vicinity of the stringer 4 in the skin 3, and a delamination portion 7 generated between the skin 3 and the stringer 4 and having a length Ld. It should be noted that the length Ld is shorter than the length Ls. At the location of the structure 2 illustrated in Fig. 10, the measurement location on the skin 3 is between a position Zs and a position Ze, the region where the stringer 4 is provided is between a position Za and a position Zb, and the region where the delamination portion 7 has been generated is between a position Z1 and a position Z2. The delamination portion 7 is an abnormality caused by an external impact 8 such as lightning strike and bird impact and is an irreversible structural change. The vertical arrows illustrated in Fig. 10 schematically illustrate the load that is applied to the location of the structure 2 illustrated in Fig. 10 and indicate that a load σ is applied along the Z-axis direction. The load σ is a parameter that changes with time during the flight of the aircraft 1. The parameter is estimated on the basis of the environmental data 102 in a case where the parameter is not particularly measured by the measuring instrument 20.

The reference data 105 at the location of the structure 2 illustrated in Fig. 10 is the measurement data 101 measured in a case where the delamination portion 7 is not generated and the load σ is each of F1, F2, and F3. It should be noted that F3 is a value greater than F2 and F2 is a value greater than F1. As illustrated in Fig. 11, the reference data 105 at the location of the structure 2 illustrated in Fig. 10 has a position distribution in which, in the Z-axis direction, each of the regions between the position Zs and the position Za and between the position Zb and the position Ze, where the stringer 4 is not provided, is larger in strain ε than the region between the position Za and the position Zb, where the stringer 4 is provided. In addition, as illustrated in Fig. 11, the reference data 105 at the location of the structure 2 illustrated in Fig. 10 has a tendency that the strain ε takes an extreme value and significantly changes in the vicinity of the position Za and the position Zb on the boundary line of the stringer 4 in the Z-axis direction. In addition, as illustrated in Fig. 11, the reference data 105 at the location of the structure 2 illustrated in Fig. 10 has a tendency that the strain ε increases as the load σ increases from F1 to F3 through F2.

The measurement data 101 at the location of the structure 2 illustrated in Fig. 10 is measured in a case where the delamination portion 7 is generated and the load σ is each of F1, F2, and F3. As illustrated in Fig. 12, the measurement data 101 at the location of the structure 2 illustrated in Fig. 10 has a position distribution in which the strain ε in the region between the position Z1 and the position Z2, where the delamination portion 7 has been generated, is larger than in the reference data 105 illustrated in Fig. 11. In addition, as illustrated in Fig. 12, the measurement data 101 at the location of the structure 2 illustrated in Fig. 10 has a tendency that the strain ε takes an extreme value and significantly changes in the vicinity of the position Z1 and the position Z2 on the boundary line of the region where the delamination portion 7 has been generated. The reference data 105 illustrated in Fig. 11 lacks this tendency.

As illustrated in Figs. 11 and 12, the first risk evaluation unit 50 is capable of diagnosing that there is a damage occurrence risk by extracting a region where the delamination portion 7 has been generated with higher accuracy insofar as the measurement data 101 and the reference data 105 can be compared for each of cases where the load σ is F1, F2, and F3. Therefore, the first risk evaluation unit 50 is capable of performing comparison for each of cases where the load σ is F1, F2, and F3 by executing the measurement data and environmental data acquisition step S11 and acquiring the environmental data 102 enabling the estimation of the load σ along with the measurement data 101 for comparison with the reference data 105.

In the characteristic value calculation step S12, the characteristic value data 103 is acquired by the characteristic value calculation processing unit 51 extracting a statistical feature value matching the physical model of the sound state of the structure 2 of the aircraft 1 in the measurement data 101 and calculation processing the measurement data 101 into this feature value.

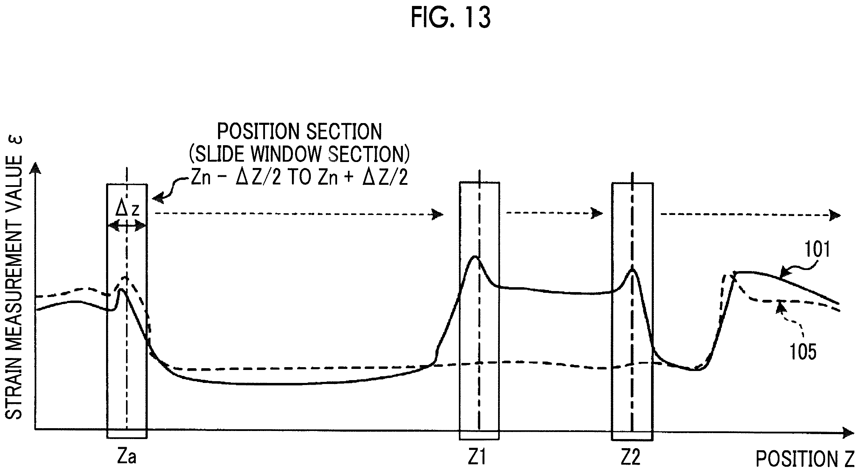

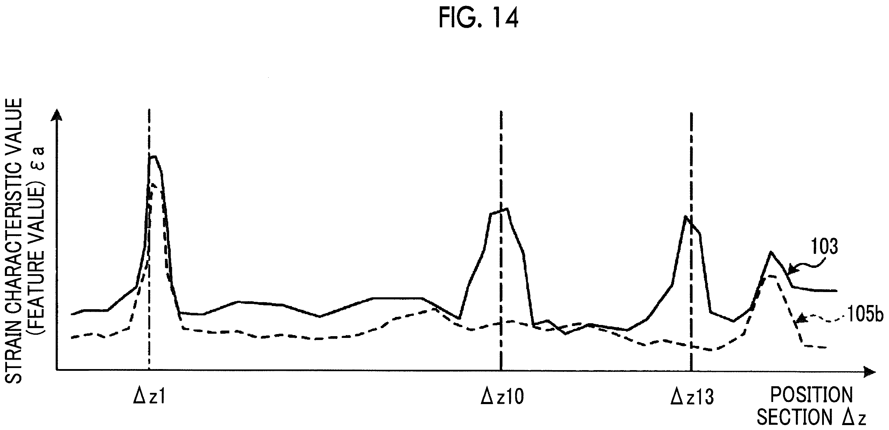

Fig. 13 is an explanatory diagram illustrating the calculation of the characteristic value data 103 from the measurement data 101 at the location in Fig. 10. Fig. 14 is a diagram illustrating the characteristic value data 103 at the location in Fig. 10 and reference data 105b obtained by converting the reference data 105 into a characteristic value. The characteristic value calculation step S12 will be described in detail with reference to Figs. 13 and 14.

As illustrated in Fig. 13, in the characteristic value calculation step S12, the characteristic value calculation processing unit 51 first divides the measurement range defined in the Z-axis direction into a plurality of position sections Δz (slide window sections) having a small width in the Z-axis direction. The position section Δz may be set equal to a measurement position interval δz, which is the acquisition interval of the measurement data 101 in the Z-axis direction, or may be set larger than the measurement position interval δz. In the following description, the position sections Δz will be sequentially referred to as position sections Δz1, Δz2, ... in the Z-axis direction in a case where each of the position sections Δz is distinguished. In other words, the position section Δz will be referred to as the position section Δzn (n = 1, 2, ...). Each position section Δzn is a section having a width of Δz/2 in the ±Z direction with respect to a center position zn. Specifically, the position section Δzn is a section of zn-Δz/2 or more and zn+Δz/2 or less. Here, when a slide window method is used, handling as a vector value is performed as a correlation between scalar values in the window section. The vector value can be handled as a feature value of a statistical abnormality detection method. The sensitivity of the health index value is expected to be enhanced when the feature value is used. In the characteristic value calculation step S12, the characteristic value calculation processing unit 51 subsequently extracts, for example, characteristic values such as a variance value, an average value, and a median value as statistical feature values and calculates the characteristic values in each divided position section. In the example illustrated in Fig. 13, the characteristic value calculation processing unit 51 calculates, in the characteristic value calculation step S12, a variance value εa (characteristic value a), an average value εb (characteristic value b), and a median value εc (characteristic value c) of the strain ε in each divided position section Δz.

In the characteristic value calculation step S12, the characteristic value calculation processing unit 51 subsequently executes calculation processing similar to the calculation processing for the measurement range defined in the Z-axis direction also with regard to another spatial direction if necessary and calculates the characteristic value in a divided space also with regard to the spatial direction. As a result, the characteristic value calculation processing unit 51 is capable of acquiring the characteristic value data 103.

As illustrated in Fig. 14, the reference data 105 converted into the characteristic value acquired by the characteristic value calculation processing unit 51 executing the characteristic value calculation step S12 on the basis of the reference data 105 at the location in Fig. 10 has a tendency that the variance value εa as the characteristic value (feature value) of the strain ε takes an extreme value and significantly changes in, for example, the position section Δz1 including the position where the strain ε significantly changes with an extreme value.

As illustrated in Fig. 14, the characteristic value data 103 acquired by the characteristic value calculation processing unit 51 executing the characteristic value calculation step S12 on the basis of the measurement data 101 at the location in Fig. 10 has a tendency that the variance value εa as the characteristic value (feature value) of the strain ε takes an extreme value and significantly changes in, for example, the position sections Δz1, Δz10, and Δz13 including the position where the strain ε significantly changes with an extreme value.

Although the characteristic value data 103 has a tendency that the variance value εa as the characteristic value (feature value) of the strain ε takes an extreme value and significantly changes in, for example, the position section Δz1 including the positions Za and Zb on the boundary line of the stringer 4, the reference data 105b converted into a characteristic value also has a tendency that the variance value εa significantly changes with an extreme value in, for example, the position section Δz1. On the other hand, although the characteristic value data 103 has a tendency that the variance value εa as the characteristic value (feature value) of the strain ε takes an extreme value and significantly changes in the position sections Δz10 and Δz13 including the positions Z1 and Z2 on the boundary line of the region where the delamination portion 7 has been generated, the reference data 105b converted into a characteristic value has not a tendency that the variance value εa significantly changes with an extreme value in the position sections Δz10 and Δz13. It can be seen from the above that the characteristic value data 103 and the reference data 105b converted into a characteristic value have a common tendency in, for example, the position section Δz1 not related to the generation of the delamination portion 7 and the characteristic value data 103 and the reference data 105b converted into a characteristic value have different tendencies in the position sections Δz10 and Δz13 related to the generation of the delamination portion 7.

Therefore, the first risk evaluation unit 50 is capable of enhancing the accuracy of extraction of the possibility of damage to the delamination portion 7 and the like by calculation processing the measurement data 101 into the characteristic value data 103 and calculation processing the reference data 105 into the reference data 105b converted into a characteristic value by executing the characteristic value calculation step S12.

It should be noted that the characteristic value data 103 has the variance value εa as the characteristic value (feature value) of the strain ε that indicates a value similar to the reference data 105b converted into a characteristic value in the small-change region that is a valley between the right foot of the peak about the position section Δz10 and the left foot of the peak about the position section Δz13 among the regions between the position sections Δz10 and Δz13 including the positions Z1 and Z2 on the boundary line of the region where the delamination portion 7 has been generated. However, in the region between the position sections Δz10 and Δz13 including the positions Z1 and Z2 on the boundary line of the region where the delamination portion 7 has been generated, it is possible to find the difference between the characteristic value data 103 and the reference data 105b converted into a characteristic value by using the average value εb and the median value εc as the characteristic values (feature values) of the strain ε. In other words, in a case where a damaged part is present, the characteristic value data 103 indicates data different from the reference data 105b converted into a characteristic value in at least one of the variance value εa, the average value εb, and the median value εc at the damaged part. Here, only the variance value εa is exemplified for describing the processing of the characteristic value calculation step S12 and the average value εb and the median value εc are not exemplified.

It is possible to find the difference between the characteristic value data 103 and the reference data 105b converted into a characteristic value by using a plurality of types of specific values in this manner. Accordingly, it is possible to enhance the accuracy of extraction of the possibility of damage to the delamination portion 7 and the like by adopting the health index value calculated by a statistical method. Specifically, it is possible to enhance the accuracy of extraction of the possibility of damage to the delamination portion 7 and the like by quantitatively analyzing, by factor analysis, the superiority or inferiority indicating how much the specific values contribute to the damage and using a value in which the specific values are appropriately combined on the basis of the analysis result by, for example, calculating a signal noise (SN) ratio.

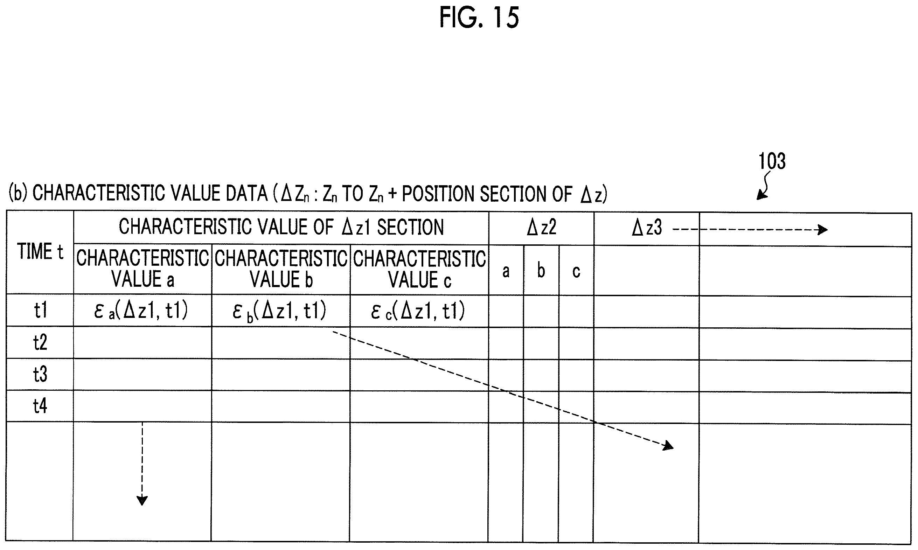

Fig. 15 is a diagram illustrating an example of the characteristic value data 103 in Fig. 4. As illustrated in Fig. 15, the characteristic value data 103 is a data set on the position sections Δz1, Δz2, Δz3, Δz4, ... in a measurement range and the variance value εa (characteristic value a), the average value εb (characteristic value b), and the median value εc (characteristic value c) of the strain ε associated with the times t1, t2, t3, t4, ... at the respective positions.

In signal data set creation step S13, the signal data set creation processing unit 52 creates the temporary signal data set 104, which is a temporary state of the signal data set 106, by matching the characteristic value data 103 acquired from the characteristic value calculation processing unit 51, the environmental data 102 acquired from the environmental measuring instrument 26, and the disturbance data 109 so as to be associated with the same time change.

Fig. 16 is a diagram illustrating an example of the temporary signal data set 104 in Fig. 4. As illustrated in Fig. 16, the temporary signal data set 104 is a data set in which the characteristic value data 103, the environmental data 102, and the disturbance data 109 are associated with the same time change. As illustrated in Fig. 16, the temporary signal data set 104 is exemplified by a data set in which a specific item of the characteristic value data 103, a characteristic item of the environmental data 102, and each specific item of the disturbance data 109 are arranged in the column direction in the row direction with the time associated with the same time used as a data index.

In the health index value calculation step S14, the health index value calculation processing unit 53 calculates the health index value by performing calculation processing on the basis of the temporary signal data set 104 acquired from the signal data set creation processing unit 52 and the reference data 105 acquired from the first storage unit 32. Specifically, in the health index value calculation step S14, the health index value calculation processing unit 53 calculates the state of deviation of the temporary signal data set 104 from the reference data 105 as a unified health index value such as the MD value by executing predetermined statistical calculation processing such as calculation processing based on the MT method.

In the signal data set update step S15, the signal data set update processing unit 54 creates the signal data set 106 by matching the temporary signal data set 104 acquired from the health index value calculation processing unit 53 and the MD value as a health index value so as to be associated with the same time change.

In the normality-abnormality determination step S16, the normality-abnormality determination processing unit 55 determines, on the basis of the signal data set 106 acquired from the signal data set update processing unit 54 and the normality-abnormality determination criteria data 107 acquired from the first storage unit 32, which part of the structure 2 of the aircraft 1 is in a structurally normal state and which part of the structure 2 of the aircraft 1 is likely to be in a structurally abnormal state without being in a structurally normal state when the measurement data 101 as the basis of the signal data set 106 is measured and creates the normality-abnormality determination result data 108 based on the determination result.

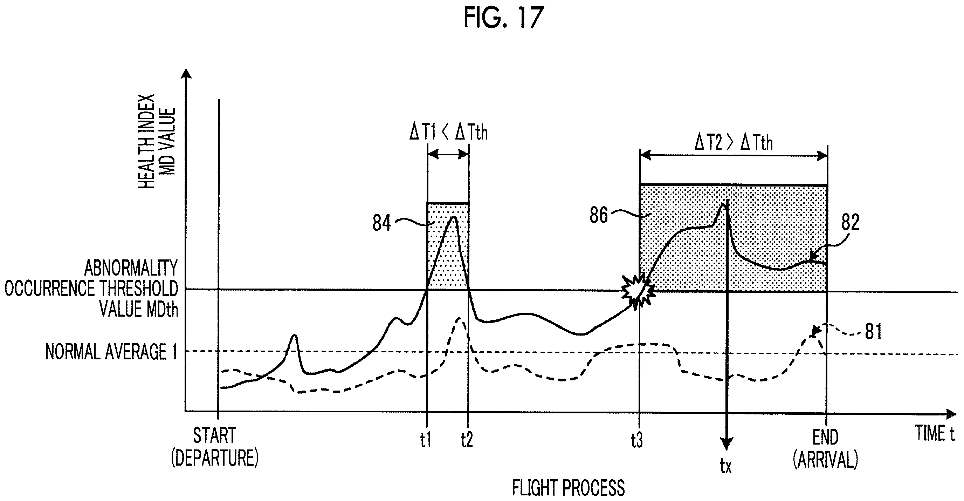

Fig. 17 is an explanatory diagram illustrating the normality-abnormality determination step S16 in Fig. 9 and the second risk evaluation step S4 in Fig. 6. As illustrated in Fig. 17, an abnormality occurrence threshold value MDth is set to a predetermined threshold value that does not change with time. The abnormality occurrence threshold value MDth is a reference value. When a value exceeds the reference value (for example, when a value is equal to or greater than the reference value), the normality-abnormality determination processing unit 55 determines that there is a possibility of abnormality occurrence. When a value is below the reference value (for example, when a value is less than the reference value), the normality-abnormality determination processing unit 55 determines that the current state is an abnormality-less normal state. As illustrated in Fig. 17, the normal average is a value exemplified by 1/2 of the abnormality occurrence threshold value MDth and is illustrated in Fig. 17 as a standard of the average value of a normal state that is not abnormal. A health index value 81 is a time-series change in the MD value calculated from the measurement data 101 measured during the A-th flight of the aircraft 1. A health index value 82 is a time-series change in the MD value calculated from the measurement data 101 measured during the B-th flight of the aircraft 1.

As illustrated in Fig. 17, the health index value 81 is below the abnormality occurrence threshold value MDth, which is a predetermined threshold value, at all times during flight. Accordingly, in the normality-abnormality determination step S16, the normality-abnormality determination processing unit 55 determines that there is no part likely to be in an abnormal state regardless of the time when the health index value 81 is taken out and determined. Subsequently, the normality-abnormality determination processing unit 55 creates the new reference data 105a on the basis of the entire signal data set 106 and then ends the first risk evaluation step S2 in accordance with the No arrow in the normality-abnormality determination step S16.

As illustrated in Fig. 17, the health index value 82 exceeds the abnormality occurrence threshold value MDth between time t1 and time t2 during flight and between time t3 and arrival. Here, the region between time t1 and time t2 exceeding the abnormality occurrence threshold value MDth is referred to as an abnormal region 84. In addition, the region between time t3 and arrival exceeding the abnormality occurrence threshold value MDth is referred to as an abnormal region 86. Accordingly, in the normality-abnormality determination step S16, the normality-abnormality determination processing unit 55 determines that there is a part likely to be in an abnormal state in a case where the normality-abnormality determination processing unit 55 takes out and determines the health index value 82 in the abnormal region 84 and the abnormal region 86. Subsequently, the normality-abnormality determination processing unit 55 separates the normal part from the part likely to be abnormal, creates the new reference data 105a on the basis of the normal part of the signal data set 106, and then causes the flow of the first risk evaluation step S2 to proceed to the warning notification step S17 in accordance with the Yes arrow in the normality-abnormality determination step S16.

In a case where the normality-abnormality determination processing unit 55 determines in the normality-abnormality determination step S16 that there is a part likely to be in an abnormal state (Yes in the normality-abnormality determination step S16), the warning notification unit 56 is caused first in the warning notification step S17 to perform alarm notification indicating that the determination that there is a part likely to be in an abnormal state has been made. In the warning notification step S17, the warning notification unit 56 subsequently acquires, by the normality-abnormality determination processing unit 55, a command for alarm notification that it has been determined that there is a part likely to be in an abnormal state and notifies the alarm to that effect. The normality-abnormality determination processing unit 55 ends the first risk evaluation step S2 after the warning notification step S17.

Although the alarm notification indicating that the determination that there is a part likely to be in an abnormal state has been made is performed in the warning notification step S17 in the present embodiment, the present invention is not limited thereto and a display unit electrically connected to the first risk evaluation unit 50 of the first control unit 42 may display information describing the part likely to be in an abnormal state, examples of which include a sentence and an image.

In the second risk evaluation step necessity determination step S3 illustrated in Fig. 6, it is determined whether or not there is a need for the second risk evaluation unit 60 to evaluate the risk of damage occurrence in the structure 2. In a case where it is determined in the normality-abnormality determination step S16 that no part is likely to be in an abnormal state, it is determined in the second risk evaluation step necessity determination step S3 that there is no need for the second risk evaluation unit 60 to evaluate the risk of damage occurrence in the structure 2. Then, the flow of the aircraft health diagnostic method is ended in accordance with the No arrow in the second risk evaluation step necessity determination step S3 and without the second risk evaluation step S4 and the maintenance evaluation step S5 in Fig. 6 being executed.

On the other hand, in a case where it is determined in the normality-abnormality determination step S16 that there is a part likely to be in an abnormal state, it is determined in the second risk evaluation step necessity determination step S3 that there is a need for the second risk evaluation unit 60 to evaluate the risk of damage occurrence in the structure 2. Then, the flow of the aircraft health diagnostic method is allowed to proceed to the second risk evaluation step S4 in Fig. 6 in accordance with the Yes arrow in the second risk evaluation step necessity determination step S3.

It should be noted that the determination result of the second risk evaluation step necessity determination step S3 has a one-to-one correspondence with the determination result of the normality-abnormality determination step S16 and thus the normality-abnormality determination processing unit 55 executing the normality-abnormality determination step S16 may execute the second risk evaluation step necessity determination step S3 along with the normality-abnormality determination step S16.

As described above, in the first risk evaluation step S2, the first risk evaluation unit 50 included in the first control unit 42 evaluates whether or not the structure 2 of the aircraft 1 has a damage occurrence risk by extracting the possibility of a structurally abnormal state in the structure 2 of the aircraft 1, that is, the possibility of an irreversible structural change on the basis of the correlation between the reference data 105 and the temporary signal data set 104, which is temporary signal data calculated on the basis of the measurement data 101.

In the second risk evaluation step S4 in Fig. 6, the second risk evaluation unit 60 included in the second control unit 44 evaluates whether or not the structure 2 of the aircraft 1 has a damage occurrence risk by diagnosing an irreversible structural change in the structure 2 of the aircraft 1 on the basis of the behavior of a time-series change in the signal data set 106 in which the first risk evaluation unit 50 has evaluated that there is a damage occurrence risk.

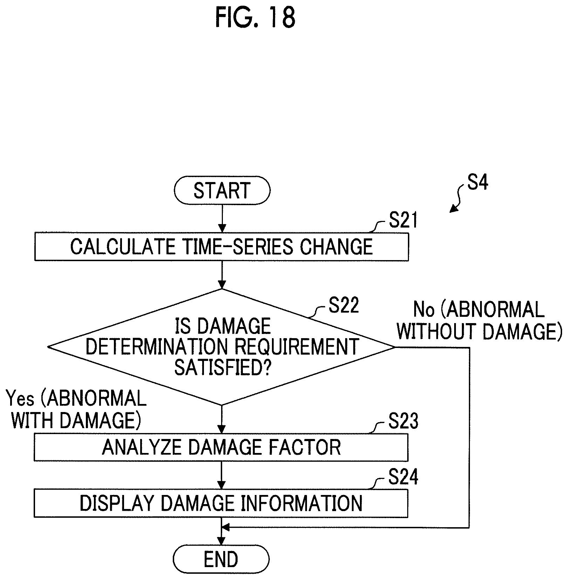

Fig. 18 is a flowchart illustrating the details of the second risk evaluation step S4 in Fig. 6. The details of the second risk evaluation step S4 will be described with reference to Fig. 18. As illustrated in Fig. 18, the second risk evaluation step S4 includes a time-series change calculation step S21, a damage determination step S22, a damage factor analysis step S23, and a damage information display step S24.

In the time-series change calculation step S21, the time-series change calculation processing unit 61 creates the time-series change data 111 on the basis of the signal data set 106 that has been acquired via the information communication unit 46 from the first risk evaluation unit 50 and in which the first risk evaluation unit 50 has evaluated that there is a damage occurrence risk. Specifically, in the time-series change calculation step S21, the time-series change calculation processing unit 61 creates data indicating the behavior of a time-series change regarding at least one of the health index value and various values included in the characteristic value data 103, which are included in the signal data set 106, and uses the data as the time-series change data 111.

The health index value 82 illustrated in Fig. 17 is the time-series change data 111 indicating the behavior of a time-series change regarding the MD value included in the signal data set 106 created on the basis of the measurement data 101 measured during the B-th flight of the aircraft 1 and the time-series change calculation processing unit 61 creates the health index value 82 in the time-series change calculation step S21.

In the damage determination step S22, the damage determination processing unit 62 determines, on the basis of the time-series change data 111 acquired from the time-series change calculation processing unit 61 and the damage determination criteria data 112 acquired from the second storage unit 34, which part of the structure 2 of the aircraft 1 is in a normal state where no irreversible structural change is observed and which part of the structure 2 of the aircraft 1 is in an abnormal state where an irreversible structural change is observed when the measurement data 101 as the basis of the time-series change data 111 is measured and creates the damage determination result data 113 based on the determination result.

As illustrated in Fig. 17, in the abnormal region 84, the health index value 82 that is the time-series change data 111 exceeds the abnormality occurrence threshold value MDth for time ΔT1, which is from time t1 to time t2. In addition, as illustrated in Fig. 17, in the abnormal region 86, the health index value 82 that is the time-series change data 111 exceeds the abnormality occurrence threshold value MDth for time ΔT2, which is from time t3 to arrival. Here, the damage determination criteria data 112 is defined such that it is determined that the current state is a normal state where no irreversible structural change is observed in a case where the abnormality occurrence threshold value MDth is exceeded for less than a threshold value ΔTth and it is determined that the current state is an abnormal state where an irreversible structural change is observed in a case where the abnormality occurrence threshold value MDth is exceeded for the threshold value ΔTth or longer. In addition, the threshold value ΔTth is a period longer than time ΔT1 and shorter than time ΔT2. Accordingly, in the damage determination step S22, the damage determination processing unit 62 determines that the abnormal region 84 of the health index value 82 is in a normal state where no irreversible structural change is observed and the abnormal region 86 of the health index value 82 is in an abnormal state where an irreversible structural change is observed. In addition, in the damage determination step S22, the damage determination processing unit 62 recognizes time tx, which is a peak of the health index value 82, as a parameter related to this abnormal state in the abnormal region 86 of the health index value 82 determined as being in an abnormal state where an irreversible structural change is observed.

In a case where the damage determination processing unit 62 determines in the damage determination step S22 that no part is abnormal, the damage determination processing unit 62 causes the damage information display processing unit 64 to create a display screen indicating that no part is abnormal. In addition, in the damage determination step S22, the damage information display processing unit 64 causes the display unit 65 to display the display screen indicating that no part is abnormal and ends the flow of the second risk evaluation step S4 in accordance with the No arrow in the damage determination step S22. In addition, in the damage determination step S22, it is determined that there is no need to execute the maintenance evaluation step S5 and the flow of the aircraft health diagnostic method is ended without the maintenance evaluation step S5 in Fig. 6 being executed.

On the other hand, in a case where the damage determination processing unit 62 determines in the damage determination step S22 that there is an abnormal part such as the abnormal region 86 in the health index value 82, the damage determination processing unit 62 causes the damage factor analysis processing unit 63 to analyze the damage in an abnormal state and the factor of the damage. Then, the flow of the second risk evaluation step S4 is allowed to proceed to the damage factor analysis step S23 in accordance with the Yes arrow in the damage determination step S22.

In the damage factor analysis step S23, the damage factor analysis processing unit 63 acquires the time-series change data 111 and the damage determination result data 113 from the damage determination processing unit 62, analyzes the damage factor in an abnormal state, and creates the damage factor data 114 based on the analysis result. After the damage factor analysis step S23, the damage factor analysis processing unit 63 allows the flow of the second risk evaluation step S4 to proceed to the damage information display step S24.

In the damage factor analysis step S23, the damage factor analysis processing unit 63 analyzes the damage in an abnormal state and the factor of the damage by extracting a characteristic value significantly contributing to the health index value 82 in the abnormal region 86. Specifically, since the health index value 82 is the MD value, the damage in an abnormal state and the factor of the damage are analyzed by extracting a characteristic value having a high SN ratio gain as a characteristic value significantly contributing to an increase in the MD value in the abnormal region 86.

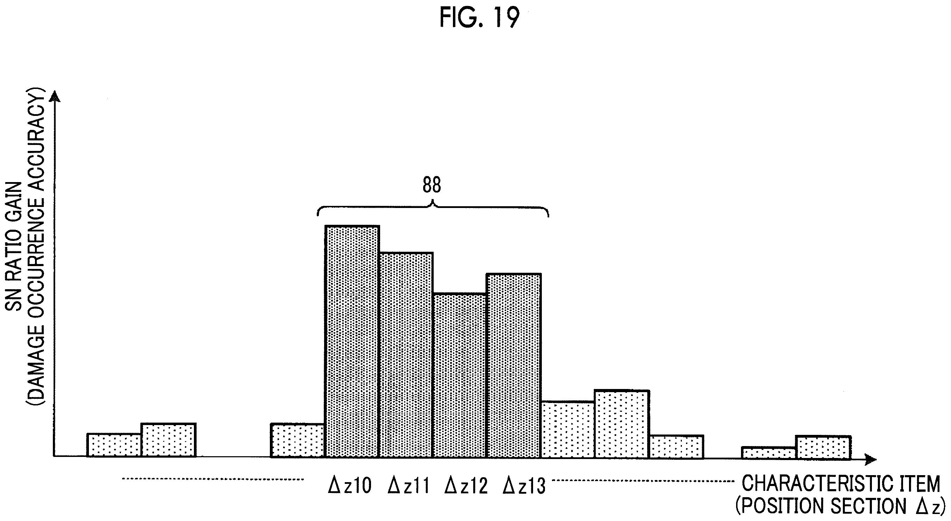

Fig. 19 is an explanatory diagram illustrating the damage factor analysis step S23 in Fig. 18. Illustrated in Fig. 19 is position section Δz distribution data of a characteristic value that significantly contributes to an increase in the MD value in the abnormal region 86. As illustrated in Fig. 19, the position section Δz distribution data of this characteristic value has a characteristic value in which the SN ratio gain is remarkably high in the position sections Δz10, Δz11, Δz12, and Δz13. In the damage factor analysis step S23, the damage factor analysis processing unit 63 extracts the position sections Δz10, Δz11, Δz12, and Δz13 having a characteristic value in which the SN ratio gain is remarkably high and specifies a damage occurrence section 88 in which the extracted characteristic values are continuous as an abnormal section in which damage has occurred. In the damage factor analysis step S23, the damage factor analysis processing unit 63 subsequently specifies the damage factor in the abnormal damage occurrence section 88 specified as the section in which the damage has occurred as if, for example, the damage factor were the delamination portion 7 between the skin 3 and the stringer 4. Further, in the damage factor analysis step S23, information indicating that the damage factor analysis processing unit 63 has specified the damage occurrence section 88 as a section where damage has occurred and information indicating that the factor is the delamination portion 7 are used as the damage factor data 114.

In the damage information display step S24, the damage factor analysis processing unit 63 first causes the damage information display processing unit 64 to create a display screen based on the damage factor data 114. In the damage information display step S24, the damage information display processing unit 64 subsequently creates a display screen based on the damage factor data 114 and causes the display unit 65 to display the display screen based on the damage factor data 114. In the damage information display step S24, the damage factor analysis processing unit 63 ends the flow of the second risk evaluation step S4.

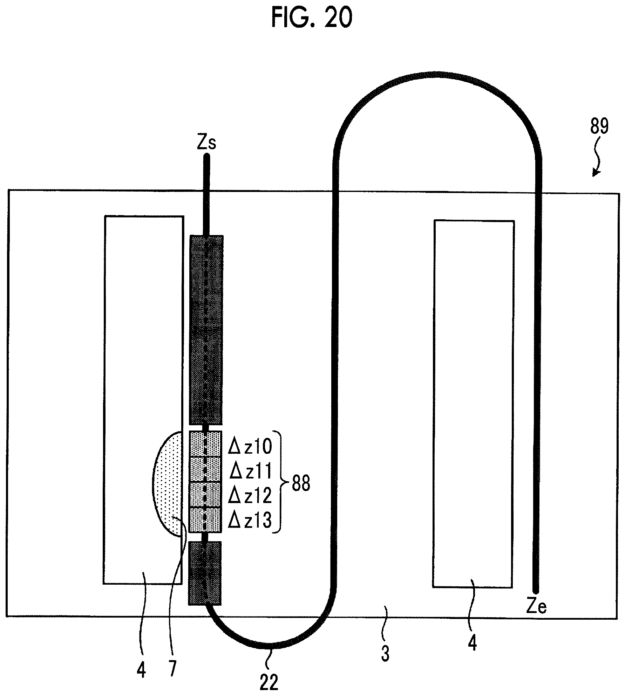

Fig. 20 is an explanatory diagram illustrating the damage information display step S24 in Fig. 18. Damage information 89 is the display screen created by the damage information display processing unit 64 and displayed by the display unit 65 in the damage information display step S24. As illustrated in Fig. 20, the damage information 89 includes information on the appearance at the location in Fig. 10 including the delamination portion 7 and information on the damage occurrence section 88 specified as a section where damage has occurred. Accordingly, the damage information 89 makes it possible to easily understand the damage factor and the section where the damage has occurred at a glance.

In the maintenance evaluation step S5 in Fig. 6, the maintenance evaluation unit 70 included in the second control unit 44 evaluates, for example, the life of the structure 2, a repair timing, and a maintenance plan on the basis of the time-series change data 111 indicating the behavior of a time-series change in the signal data set 106 used in the second risk evaluation unit 60. Specifically, in the maintenance evaluation step S5, the maintenance evaluation unit 70 calculates the life of the structure 2 by using a remaining life evaluation algorithm on the basis of, for example, the normality-abnormality determination result data 108 in the first risk evaluation unit 50, the damage determination result data 113 in the second risk evaluation unit 60, and the risk evaluation results of the first risk evaluation unit 50 and the second risk evaluation unit 60, calculates a timing close by a predetermined ratio to the calculated life of the structure 2 as a repair timing, and estimates a maintenance plan on the basis of the calculated repair timing.

In a case where delamination portion 7 is a damage factor as in the first embodiment of the present invention, the length Ld of the delamination portion 7 illustrated in Figs. 10 and 12 may increase due to a time-series change. In such a case, the progress of damage can be calculated from the length Ld of the delamination portion 7 and the life of the structure 2 and the like can be evaluated and calculated.

The aircraft health diagnostic device 10 and the aircraft health diagnostic method based on the aircraft health diagnostic device 10 are configured as described above. Accordingly, the first risk evaluation unit 50 evaluates the risk of damage occurrence in the structure 2 on the basis of the correlation between the measurement-based signal data set 106 and the reference data 105 as a reference. Accordingly, it is possible to appropriately extract the possibility of an irreversible structural change such as delamination of the adhesion portion in the structure 2 of the aircraft 1 and the progress of delamination. In addition, in the aircraft health diagnostic device 10 and the aircraft health diagnostic method based on the aircraft health diagnostic device 10, the second risk evaluation unit 60 evaluates the risk of damage occurrence in the structure 2 on the basis of the behavior of a time-series change in the signal data set 106 in which the first risk evaluation unit 50 has evaluated that there is a damage occurrence risk. Accordingly, it is possible to appropriately diagnose whether or not the state evaluated by the first risk evaluation unit 50 as having a damage occurrence risk is an irreversible structural change. In addition, in the aircraft health diagnostic device 10 and the aircraft health diagnostic method based on the aircraft health diagnostic device 10, the maintenance evaluation unit 70 evaluates the life of the structure 2, a repair timing, and a maintenance plan on the basis of the behavior of a time-series change in the signal data set 106 used in the second risk evaluation unit 60. Accordingly, it is possible to estimate the life of the structure 2, a repair timing, and a maintenance plan with high accuracy.

In the aircraft health diagnostic device 10 and the aircraft health diagnostic method based on the aircraft health diagnostic device 10, the control unit 40 includes the first control unit 42 provided in the aircraft 1 and including the first risk evaluation unit 50, the second control unit 44 provided outside the aircraft 1 and including the second risk evaluation unit 60 and the maintenance evaluation unit 70, and the information communication unit 46 performing information communication between the first control unit 42 and the second control unit 44. Accordingly, in the aircraft health diagnostic device 10 and the aircraft health diagnostic method based on the aircraft health diagnostic device 10, the possibility of an irreversible structural change can be extracted in real time during the flight of the aircraft 1 by the first risk evaluation unit 50 and whether or not a state evaluated by the first risk evaluation unit 50 as having a damage occurrence risk is an irreversible structural change can be diagnosed in a period when it is possible to process data on a time-series change during the operation of aircraft 1. Accordingly, it is possible to diagnose, for example, the delamination of the adhesion portion in the structure 2 of the aircraft 1 and the progress of the delamination in a time-efficient manner.

In the aircraft health diagnostic device 10 and the aircraft health diagnostic method based on the aircraft health diagnostic device 10, the measuring instrument 20 measures the measurement data 101 at a plurality of positions of the structure 2 and a plurality of times, also measures the environmental data 102 at the time and position of the structure 2, and associates the measurement data 101 and the environmental data 102. The storage unit 30 stores the reference data 105 set for each environment assumed to be the environmental data 102 at the plurality of positions of the structure 2 where the measurement data 101 is measured. The control unit 40 calculates the signal data set 106 at the plurality of positions of the structure 2 and the plurality of times on the basis of the measurement data 101 in a state of being associated with the environmental data 102. Accordingly, in the aircraft health diagnostic device 10 and the aircraft health diagnostic method based on the aircraft health diagnostic device 10, the correlation between the signal data set 106 and the reference data 105 can be used in evaluating the risk of damage occurrence in the structure 2 in a state where the environmental data 102 is matched. Accordingly, an irreversible structural change in the structure 2 of the aircraft 1 can be more accurately diagnosed.

In the aircraft health diagnostic device 10 and the aircraft health diagnostic method based on the aircraft health diagnostic device 10, the first risk evaluation unit 50 calculates the health index value on the basis of the signal data set 106 and evaluates whether the value exceeds the range defined in the determination criteria acquired from the storage unit 30. Accordingly, in the aircraft health diagnostic device 10 and the aircraft health diagnostic method based on the aircraft health diagnostic device 10, the risk of damage occurrence in the structure 2 is evaluated by means of the health index value, which is an index indicating the degree of deviation of the signal data set 106 from normality, and thus the possibility of an irreversible structural change in the structure 2 of the aircraft 1 can be extracted with high accuracy.

Further, in the aircraft health diagnostic device 10 and the aircraft health diagnostic method based on the aircraft health diagnostic device 10, the second risk evaluation unit 60 evaluates whether the health index value does not exceed the range defined in the determination criteria acquired from the storage unit 30 at least for a period defined in the determination criteria in the time-series change in the health index value. Accordingly, in the aircraft health diagnostic device 10 and the aircraft health diagnostic method based on the aircraft health diagnostic device 10, the risk of damage occurrence in the structure 2 is evaluated by means of the health index value, which is an index indicating the degree of deviation of the signal data set 106 from normality, and thus an irreversible structural change in the structure 2 of the aircraft 1 can be diagnosed with high accuracy.

In the aircraft health diagnostic device 10 and the aircraft health diagnostic method based on the aircraft health diagnostic device 10, the measuring instrument 20 includes the optical fiber 22 extending around the structure 2 and the optical fiber strain measuring instrument 24 measuring the strain data on the structure 2 around which the optical fiber 22 is extended by measuring the strain of the optical fiber 22. Accordingly, in the aircraft health diagnostic device 10 and the aircraft health diagnostic method based on the aircraft health diagnostic device 10, it is possible to measure a strain distribution having a high spatial resolution at a high speed by Brillouin optical correlation domain analysis by using the Brillouin scattered light generated at each point of the optical fiber 22 extending around the structure 2. As a result, in the aircraft health diagnostic device 10 and the aircraft health diagnostic method based on the aircraft health diagnostic device 10, an irreversible structural change in the structure 2 of the aircraft 1 can be diagnosed at a high speed and a high spatial resolution.

### Reference Signs List

1 Aircraft
2 Structure
3 Skin
4 Stringer
5 Frame
6 Longillon
7 Delamination portion
8 Impact
10 Aircraft health diagnostic device
20 Measuring instrument
22 Optical fiber
24 Optical fiber strain measuring instrument
26 Environmental measuring instrument
30 Storage unit
32 First storage unit
34 Second storage unit
40 Control unit
42 First control unit
44 Second control unit
46 Information communication unit
50 First risk evaluation unit
51 Characteristic value calculation processing unit
52 Signal data set creation processing unit
53 Health index value calculation processing unit
54 Signal data set update processing unit
55 Normality-abnormality determination processing unit
56 Warning notification unit
60 Second risk evaluation unit
61 Time-series change calculation processing unit
62 Damage determination processing unit
63 Damage factor analysis processing unit
64 Damage information display processing unit
65 Display unit
70 Maintenance evaluation unit
81, 82 Health index value
84, 86 Abnormal region
88 Damage occurrence section
89 Damage information
101 Measurement data
102 Environmental data
103 Characteristic value data
104 Temporary signal data set
105, 105a, 105b Reference data
106 Signal data set
107 Normality-abnormality determination criteria data
108 Normality-abnormality determination result data
109 Disturbance data
111 Time-series change data
112 Damage determination criteria data
113 Damage determination result data
114 Damage factor data

## Claims

1. An aircraft health diagnostic device comprising:
a measuring instrument provided in an aircraft and acquiring measurement data related to the aircraft;
a storage unit storing reference data as a diagnostic reference for the measurement data; and
a control unit performing aircraft structural health monitoring on the basis of the measurement data and the reference data,
wherein the control unit includes
a first risk evaluation unit evaluating a risk of damage occurrence in the structure on the basis of a correlation between signal data calculated on the basis of the measurement data and the reference data,
a second risk evaluation unit evaluating the risk of damage occurrence in the structure on the basis of a behavior of a time-series change in the signal data in which the first risk evaluation unit has evaluated that there is the risk of damage occurrence, and
a maintenance evaluation unit evaluating a life of the structure, a repair timing, and a maintenance plan on the basis of the behavior of the time-series change in the signal data used in the second risk evaluation unit.

2. The aircraft health diagnostic device according to claim 1,
wherein the control unit includes:
a first control unit provided in the aircraft and including the first risk evaluation unit;
a second control unit provided outside the aircraft and including the second risk evaluation unit and the maintenance evaluation unit; and
an information communication unit performing information communication between the first control unit and the second control unit.

3. The aircraft health diagnostic device according to claim 1 or 2, wherein
the measuring instrument measures the measurement data at a plurality of positions of the structure and a plurality of times, also measures environmental data at the positions of the structure and the times, and associates the measurement data and the environmental data with each other,
the storage unit stores the reference data set for each environment assumed as the environmental data at the plurality of positions of the structure where the measurement data is measured, and
the control unit calculates the signal data at the plurality of positions of the structure and the plurality of times on the basis of the measurement data in a state of being associated with the environmental data.

4. The aircraft health diagnostic device according to any one of claims 1 to 3, wherein the first risk evaluation unit calculates health index value on the basis of the signal data and evaluates whether the health index value does not exceed a range defined in a determination criteria acquired from the storage unit.

5. The aircraft health diagnostic device according to claim 4, wherein the second risk evaluation unit evaluates whether the health index value does not exceed the range defined in the determination criteria acquired from the storage unit for at least a period defined in the determination criteria in a time-series change in the heal th index value.

6. The aircraft health diagnostic device according to any one of claims 1 to 5,
wherein the measuring instrument includes:
an optical fiber extending around the structure; and
an optical fiber strain measuring instrument measuring strain data on the structure around which the optical fiber is extended by measuring a strain of the optical fiber.

7. An aircraft soundness diagnostic method comprising:
a measurement data acquisition step of acquiring measurement data related to an aircraft;
a first risk evaluation step of evaluating a risk of damage occurrence in a structure of the aircraft on the basis of a correlation between signal data calculated on the basis of the measurement data and reference data;
a second risk evaluation step of evaluating the risk of damage occurrence in the structure on the basis of a behavior of a time-series change in the signal data in which it has been evaluated in the first risk evaluation step that there is the risk of damage occurrence; and
a maintenance evaluation step of evaluating a life of the structure, a repair timing, and a maintenance plan on the basis of the behavior of the time-series change in the signal data used in the second risk evaluation step.
